# EUROPEAN PATENT APPLICATION

(11) **EP 4 822 596 A1**
(43) Date of publication of application: **14.10.2026**
(21) Application number: 26171624.5
(22) Date of filing: 10.04.2026
(51) Int. Cl.: G06N 3/045, G06N 3/08

(54) **DETERMINING ATTENTION CONNECTIONS BASED ON METADATA**

(30) Priority: 10.04.2025 US 202519175861
(71) Applicant: GDM Holding LLC, Mountain View, CA 94043 (US)
(72) Inventor: Hartmann, Florian Nils, 8002 Zürich (CH); Sharifi, Matthew, 8002 Zürich (CH)
(74) Representative: Marks & Clerk GST

(57) **Abstract**

A computer-implemented method comprising: receiving a query comprising one or more query tokens; receiving a plurality of context tokens and context metadata characterizing one or more of the context tokens; processing a model input that comprises the context tokens and the one or more query tokens using a machine learning model to generate a model output; and generating a response to the query based on the model output. The machine learning model comprises an attention mechanism for determining attention weights between query tokens and context tokens. Processing the model input comprises: selecting a proper subset of the plurality of context tokens based on the context metadata and the query; using the attention mechanism to determine query-to-context attention weights between the one or more query tokens and the context tokens in the proper subset of the plurality of context tokens; and generating the model output based on the query-to-context attention weights.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

This specification generally describes a system implemented as computer programs on one or more computers in one or more locations that generates a response to a query by using a machine learning model comprising an attention mechanism to attend over a plurality of context tokens. The system can use context metadata characterizing the context tokens to filter the context tokens such that the attention mechanism operates on a query-dependent subset of the context tokens.

According to a first aspect there is provided a method performed by one or more computers for generating a response to a query. The method comprises: receiving a query comprising one or more query tokens; receiving a plurality of context tokens and context metadata characterizing one or more of the context tokens (e.g., respective context metadata for each context item); processing a model input that comprises the context tokens and the one or more query tokens using a machine learning model (e.g., a Transformer machine learning model, such as an autoregressive decoder-only Transformer machine learning model) to generate a model output, and generating the response to the query based on the model output. The machine learning model comprises an attention mechanism for determining attention weights between query tokens and context tokens. Processing the model input using the machine learning model comprises: selecting a proper subset of the plurality of context tokens based on the context metadata and the query (e.g., based on the one or more query tokens); and using the attention mechanism to determine query-to-context attention weights between the one or more query tokens and the context tokens in the proper subset of the plurality of context tokens; and generating the model output based on the query-to-context attention weights.

The method can comprise configuring the attention mechanism based on the one or more query tokens so that each of the one or more query tokens attends only to the context tokens in the proper subset of the plurality of context tokens (i.e., without attending to the context tokens that are not in the proper subset of the plurality of context tokens). The method can therefore avoid determining attention weights between the one or more query tokens and the context tokens not in the proper subset of the plurality of context tokens. That is, the model output can be determined using query-to-context attention weights that do not comprise attention weights between the one or more query tokens and context tokens that are not in the proper subset of the plurality of context tokens.

As a particular example, the method can comprise determining respective embeddings of the query tokens and respective embeddings of the context tokens. Using the attention mechanism to determine attention weights between the one or more query tokens and the context tokens in the proper subset of the plurality of context tokens can then comprise applying a learned transformation (which can for example be represented as a matrix or other tensor) to the embeddings of the context tokens to obtain a corresponding key embedding for each of the context tokens. The attention weights can then be determined based on a similarity measure, such as a dot product, between the embedding of each of the query tokens and each of the key embeddings that correspond to the context tokens in the proper subset of the plurality of context tokens. Another learned transformation can be applied to the embeddings of the context tokens to obtain a value embedding for each of the context tokens. Determining the model output based on the attention weights can then comprise using the attention weights to combine the value embeddings for the corresponding context tokens in the proper subset of the plurality of context tokens.

Therefore, in some implementations, using the attention mechanism to determine query-to-context attention weights between the one or more query tokens and the context tokens in the proper subset of the plurality of context tokens can comprise: using the plurality of context tokens to determine a corresponding key embedding for each context token in the proper subset of the plurality of context tokens; and for each of the one or more query tokens, determining a respective query-to-context attention weight between the query token and each of the key embeddings for the context tokens in the proper subset of the plurality of context tokens.

In some implementations, generating the model output based on the query-to-context attention weights can comprise: using the context tokens to determine a corresponding value embedding for each context token in the proper subset of the plurality of context tokens; for each of the one or more query tokens, determining a respective output for the query token by combining the value embeddings for the context tokens using the corresponding query-to-context attention weights for the query token; and determining the model output based on the respective outputs for the one or more query tokens.

In some implementations, using the context tokens to determine the corresponding value embedding for each context token in the proper subset of the plurality of context tokens can comprise: obtaining a respective embedding for each of the context tokens in the plurality of context tokens; and using the attention mechanism to update the embeddings of the context tokens in the proper subset of the plurality of context tokens, comprising: determining context-to-context attention weights between the context tokens in the plurality of context tokens; and using the context-to-context attention weights to update the embeddings of the context tokens in the proper subset of the plurality of context tokens; and determining the corresponding value embedding for each context token in the proper subset of the plurality of context tokens based on the updated embeddings.

In some examples, determining context-to-context attention weights between the context tokens in the plurality of context tokens can comprise determining context-to-context attention weights between the context tokens in the plurality of context tokens in the proper subset of the plurality of context tokens and context tokens not in the proper subset of the plurality of context tokens. In some implementations, the method further comprises using the attention mechanism to update the embeddings of each of the context tokens in the plurality of context tokens.

In some implementations, the method comprises using the plurality of context tokens (e.g., embeddings of the context tokens) to determine a corresponding key embedding and corresponding value embedding for each of the plurality of context tokens. In some implementations, the corresponding key embedding and the corresponding value embedding for each of the context tokens is determined before the query is received. For example, the key and value embeddings can be stored in a key-value (KV-cache) and retrieved from the KV-cache when needed. In some cases, the key and value embeddings can be determined in response to one or more of the context tokens being generated.

In some implementations, generating the response to the query based on the model output comprises, selecting one or more response tokens for the response based on the model output and, for each of one or more iterations: using the attention mechanism to determine response-to-context attention weights between the one or more response tokens and the context tokens in the proper subset of the plurality of context tokens; and selecting a further one or more response tokens for the response based on the query-to-context attention weights and the response-to-context attention weights.

In some implementations, selecting one or more response tokens for the response based on the model output can comprise using the attention mechanism to determine response-to-query attention weights between each of the one or more response tokens and the one or more query tokens and wherein selecting the further one or more response tokens for the response is further based on the response-to-query attention weights.

In some implementations, the context tokens are generated by a user device and the context metadata characterizes each of the context tokens according to one or more of: a time that the context token was generated, a location of the user device when the context token was generated, and one or more sensor values measured by a sensor of the user device when the context token was generated.

In some implementations, selecting a proper subset of the plurality of context tokens based on the context metadata and the query comprises: processing the query to determine query metadata for the query; and selecting the proper subset of the plurality of context tokens based on comparisons between the query metadata and the context metadata characterizing the one or more of the context tokens.

As one example, the context metadata can indicate respective values characterizing one or more properties associated with the context tokens and the query metadata comprises one or more target values for the one or more properties. The one or more target values can, for example, be stored in a lookup table. In some cases, the comparisons between the query metadata and the context metadata can comprise determining whether the respective values characterizing one or more properties of the context tokens match the corresponding one or more target values for the one or more properties. For example, the query metadata can comprise data indicative of one or more of: a time, a period of time, a location or region e.g., as specified by a location polygon. As one example, the respective values characterizing one or more properties of the context tokens can be determined to match the corresponding one or more target values for the one or more properties if the respective values are the same as, or approximately the same as (e.g., within a given precision) the corresponding target values. In some cases, the respective values and the corresponding target values can each comprise text or image data and the respective values and the corresponding target values can be considered to match if a semantic similarity measure for the text or image data exceeds a threshold.

In some implementations, the context metadata can comprise respective values of a property that increase or decrease monotonically (e.g., the values may be timestamps), in which case the proper subset of context tokens can correspond to a subrange of the values, e.g., determined using a binary search algorithm. In some implementations, determining the proper subset of the plurality of context tokens based upon the context metadata and the query metadata may comprise using a predetermined mapping or a lookup table to determine whether values of the context metadata match corresponding values in the query metadata.

In some implementations, processing the query to determine query metadata for the query comprises processing the query using a trained query metadata extraction machine learning model to determine the query metadata for the query. The query metadata extraction machine learning model can, for example, comprise a language model or a vision language model. The query metadata extraction machine learning model can be the machine learning model or a different machine learning model.

In some implementations, the query metadata extraction machine learning model has been trained to determine query metadata for a query using one or more training examples. Each training example includes one or more query tokens and target query metadata. The training comprises: for each of the one or more training examples, processing the one or more query tokens of the training input of the training example using the metadata extraction machine learning model to generate corresponding predicted query metadata for the training example; and adjusting parameters of the metadata extraction machine learning model based on comparisons between the generated query metadata and corresponding target query metadata for the training examples.

The target query metadata for each training example can be obtained from annotations provided manually by human assessors (i.e., dataset labellers), who extract relevant information from the query, e.g., by providing values for one or more properties or categories that be associated with queries, e.g., a location or time identified in the query.

Alternatively or additionally, the target query metadata for each training example can be performed in an unsupervised (automatic) manner. As one example, each of the training examples can have an associated plurality of training context tokens and training context metadata characterizing each of the training context tokens. The target query metadata for each training example can then be determined by: using an attention mechanism (e.g., the attention mechanism of the machine learning model) to determine query-to-context attention weights between the one or more query tokens of the training example and each of the training context tokens associated with the training example; and determining the target query metadata for the training example based on the training context metadata characterizing the training context tokens and the query-to-context attention weights for the training example. For example, determining the target query metadata for the training example based on the training context metadata characterizing the training context tokens and the query-to-context attention weights for the training example can comprise: selecting a subset of the training context tokens based on the query-to-context attention weights (e.g., based on which query-to-context attention weights exceed a threshold, or based on selecting the largest (e.g., top-k) query-to-context attention weights); and determining the target query metadata for the training example based on the training context metadata characterizing the training context tokens in the subset. In some cases, determining the target query metadata for the training example based on the training context metadata characterizing the training context tokens in the subset can comprise identifying training context metadata that is common to the training context tokens in the subset and determining the target query metadata for the training example based on the common training context metadata. For example, the query-to-context attention weights can indicate that a subset of the context tokens for the training example are more relevant to the query than the other context tokens and these context tokens may be characterized by similar respective training context metadata, e.g., context metadata that has matching values for a particular property, such as a same or similar time or location. In that case, the target query metadata can comprise a value for the particular property, with the value being determined from the context metadata and/or from the one or more query tokens that attend to the context tokens in the subset.

In some implementations, generating a response to the query based on the model output can comprise: determining a candidate response based on the model output; processing the candidate response and the query to generate validation data indicating whether the candidate response satisfies the query; modifying the query metadata based upon the validation data; modifying the proper subset of the plurality of context tokens based upon the context metadata and the modified query metadata; using the attention mechanism to determine modified query-to-context attention weights between the one or more query tokens and the context tokens in the modified proper subset of the plurality of context tokens; generating a modified model output based on the modified query-to-context attention weights; and generating the response based on the modified model output.

As one example, the response can be generated based on the model output and the modified model output. In some cases, processing the candidate response and the query to generate validation data indicating whether the candidate response satisfies the query can be performed by a validation machine learning model (e.g., a language model), which can be the same as or different from the machine learning model used to generate the model output. The validation data can, for example, comprise a score for whether the candidate response satisfies the query, e.g., a probability value indicating a probability that a human scorer would determine that the candidate response satisfies the query. If the validation data indicates that the candidate response satisfies the query then the candidate response can be provided as the response, e.g., without a modified model output needing to be determined.

In some examples, the machine learning model is a language model or a vision language model. In some examples, the machine learning model can be configured to receive an input sequence of tokens greater than 64,000 in length.

In some implementations, the plurality of context tokens (and/or the one or more query tokens) can represent one or more of: text data, image data, audio data, video data, and sensor data (e.g., time-series data). The plurality of context tokens can be generated by a client device, such as a mobile phone (e.g., smartphone), smart glasses, personal or tablet computers, smart watches and so on. For example, the plurality of context tokens can comprise image data, video data and/or audio data recorded using a camera or microphone of the client device (e.g., smart glasses). In some implementations, the client device can additionally or alternatively comprise other types of sensor, such as environmental sensors (e.g., pressure, humidity or light intensity sensors).

The response can, for example, comprise one or more of text data, image data, audio data, video data, control signal data, and categorical data.

In some implementations, the plurality of context tokens represent one or more of: text data, image data, audio data, video data, and sensor data. The context tokens (and/or query tokens) can, in some implementations, represent data of more than one modality and the machine learning model can be a multimodal machine learning model.

In general, the machine learning model is configured to generate the model output by performing a machine learning task. The machine learning task can, for example, comprise one or more of: an object or action detection task, a classification task (e.g., audio, image or video or classification task), a captioning task, a question-answering task, a character or word recognition task, a summarization task, a machine-translation task, an image or audio generation task, or a computer language generation task. For example, when the plurality of context tokens represent image or video data, the machine learning task can comprise an image or video processing task, such as an object or action detection task, an image segmentation task, a scene classification task, a scene description task, a key-point detection task, an object tracking task, and so on. As another example, when the plurality of context tokens represents audio data, the machine learning task can comprise an audio processing task, such as a sound or word (e.g., keyword) recognition task, a speaker recognition task, a speaker isolation task, an audio transcription task, and so on.

In some implementations, the context tokens can represent observations of a real-world (i.e., physical) environment. The query can then, for example, be a request for information about the real-world environment. As one example, the context metadata can identify respective locations in the real-world environment at which the observations were made and the query can identify one or more of the locations. The proper subset of the plurality of context tokens can then be selected based on whether the context metadata for the context tokens matches a location identified in the query. For example, the query can comprise "What was the name of the restaurant I visited in Zurich last month?" and the proper subset of the plurality of context tokens can be selected based on whether the context metadata identifies a location of Zurich. For this example, the context metadata can additionally comprise respective timestamps corresponding to when the context tokens were generated and the timestamps can be used to select the proper subset of the plurality of context tokens based on whether the context tokens were generated during the previous month. The machine learning model can, for example, then determine the corresponding model output by applying the attention mechanism to context tokens in the proper subset that contain information about the restaurant, such as images of the restaurant, audio data comprising speech mentioning the restaurant, booking information for the restaurant, and so on.

In some implementations, the machine learning model can process the query to perform a location task. As one example, the context tokens can represent observations (e.g., in the form of image, video, audio or other sensor data) of a real-world environment. The query can then, for example, comprise a request to locate an object (i.e., a particular object or an object belonging to a particular class of objects) or a place in the real-world environment and the machine learning model can process the query and the context tokens to generate a model output identifying the location of the object or place in the real-world environment. For example, the response can comprise navigation information (e.g., directions) for locating the object or place, the navigation information being obtained from the model output or a different source of navigation information (e.g., Google Maps) based on the model output.

In some implementations, the method further comprises performing an agent control task, wherein an agent (e.g., a robot or mechanical agent) interacts with an environment (e.g., a real-world environment) to perform the agent control task, wherein the context tokens and/or the one or more query tokens include one or more observations of the environment, and wherein the model output is used to select one or more actions to be performed by the agent in the environment in response to the one or more observations. As one example, the context tokens can represent observations of a real-world environment, the query can comprise a request or instruction for a task to be performed by a robot in the real-world environment, and the response can comprise the selected one or more actions.

In some implementations, the environment is a real-world environment, the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the mechanical agent, e.g., robot, may be interacting with the environment to accomplish a specific task (specified in the query, for example), e.g., to locate or manipulate an object of interest in the environment or to move an object of interest to a specified location in the environment or to navigate to a specified destination in the environment. In some implementations, the response is for controlling one or more mechanical and/or electronic devices to perform a predetermined task in a real-world environment. For example, the context tokens can represent observations of the real-world environment and the response can comprise instructions or control signals for controlling the mechanical and/or electronic devices to perform the task.

The method can further comprise: generating, using a client device, context data comprising the plurality of context tokens; receiving, from the client device, the query and the context data; and transmitting the response to the query over a computer network to the client device.

According to a further aspect of the present disclosure, there is provided a computing system comprising: one or more processors; and one or more non-transitory computer-readable media storing computer-readable instructions configured to cause one or more processors to perform a method according to the first aspect above.

According to a further aspect of the present disclosure, there is provided one or more non-transitory computer-readable media storing computer-readable instructions configured to cause one or more computing devices to perform a method according to the first aspect above.

Particular embodiments of the subject matter described in this specification can be implemented so as to realize one or more of the following advantages.

Attention-based machine learning models have been a key element of many recent breakthroughs in deep learning. For example, the incorporation of attention mechanisms in large language models (LLMs) and vision language models (VLMs), such as Transformer-based LLMs and VLMs, has led to very significant performance improvements on a variety of tasks, such as autoregressive next token prediction. However, attention-based machine learning models can scale poorly with context length, i.e., with the number of tokens provided as input to the attention mechanism, leading to substantial computational resources being required at inference time, e.g., in terms of the number of operations that need to be performed to generate, and the amount of memory to store, the attention weights of the attention mechanism. For example, conventional attention mechanisms can have a quadratic time and space complexity with respect to the number of context tokens.

The systems and methods described in this specification can greatly reduce the amount of computational resources required by an attention mechanism by selecting a proper subset of the context tokens based on a query and context metadata characterizing one or more of the context tokens.

As one example, the query can relate to a particular time or range of times and the context tokens may be associated with context metadata characterizing a respective time at which each of the context tokens was generated, e.g., based on measurements made by one or more sensors in a real-world environment. The proper subset of the context tokens can then comprise the context tokens that were generated at the particular time, or during the range of times, according to the context metadata.

By using the attention mechanism to determine attention weights between each of the query tokens of a query and the context tokens in the proper subset of the plurality of context tokens, the receptive field of the attention mechanism can be limited so that each query token attends only to the context tokens that are relevant to the particular query. Thus, attention weights between the query tokens and the context tokens that are not relevant to the query do not need to be computed or stored. Latencies for providing responses to queries can therefore be reduced significantly. In some cases, responses can be generated using fewer computational resources, e.g., such that the response can be generated at least partially by a client device.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 schematically depicts a system for generating a response to a query using a proper subset of context tokens.
FIG. 2 schematically depicts a system for determining a proper subset of context tokens for generating the response to the query.
FIG. 3 schematically depicts a specific example of a system for generating a response to a query using query metadata and context metadata.
FIG. 4 schematically depicts a system for generating a training dataset for training a query metadata function.
FIG. 5 schematically depicts a system for enhancing a response to a query using a machine learning model by modifying query metadata.
FIG. 6 depicts a flow diagram of a method performed by one or more computers consistent with the techniques described herein.

Like reference numbers and designations in the various drawings indicate like elements.

### DETAILED DESCRIPTION

Machine learning models such as language models (LMs) and vision language models (VLMs) are increasingly being implemented to solve a wide variety of complex tasks. That is, machine learning models may receive a query and generate a response accordingly. As discussed below, machine learning models may generate the response to the query by processing one or more query tokens indicative of the query (e.g., one or more numeric values each representing a respective word or word piece) and one or more context tokens (e.g., representations of (parts of) text, image, audio, video, etc.). A key property of machine learning models is their context "size" or "length", which determines the maximum number of input tokens - and hence the maximum amount of information - that may be provided as input to the model. For example, a machine learning model having a context size of 4096 may only receive input up to 4096 tokens, such that inputs with more than this number of tokens may be truncated by the model, with an associated loss of information. For many applications, it is desirable to make use of days, weeks, or months of user-generated data. Hence, machine learning models with a large context size may be provided in cases where a large amount of contextual information is required (e.g., where the query is particularly complex or where the query is contextually specific).

There are a number of challenges with machine learning models having a large context size. First, such machine learning models often incur an increased computational cost. For example, many machine learning models implement an attention mechanism associated with a quadratic computational complexity (e.g., time and space complexity), meaning that as the input / context size grows, computational load increases disproportionately. Such increases in computational load can have a corresponding disproportionate effect on energy consumption. Additionally, the overall time to generate the response to the query (i.e., latency) can increase in a similar manner, which can lead to a poor user experience and/or act as a bottleneck for other systems that may require the response to the query for further processing.

For machine learning models with very large input dimensions (e.g., hundreds of thousands or millions of tokens in length), extracting relevant information from the context may be challenging for the machine learning model to achieve when compared to machine learning models with smaller input dimensions. In other words, machine learning models using an attention mechanism may struggle to prioritize information in the input due to "attention dilution". That is, as the input sequence grows in length, each token in the sequence has a greater number of tokens to compete with for a higher attention score, thus leading to a flatter or more evenly distributed array of attention weights, which may be less useful for discerning which parts of the input sequence the model should attend to. An additional concern with large context sizes is that such machine learning models are more likely to be provided inputs containing irrelevant information. In other words, where a high number of context tokens are provided as input, it follows that there is a correspondingly high likelihood that at least some of those context tokens may be irrelevant to the query. For these reasons, it is desirable to reduce the number of context tokens considered for attention computations. The methods and systems described herein are directed to addressing the foregoing problems and in general are directed to improving computational efficiency, reducing latency, and increasing performance (e.g., accuracy) of the machine learning models described herein.

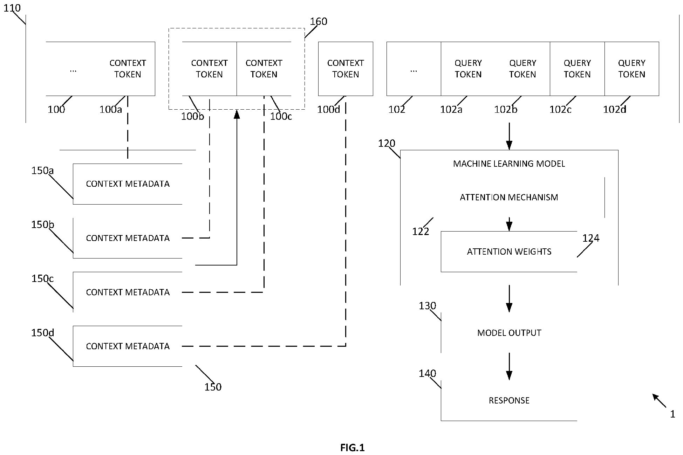

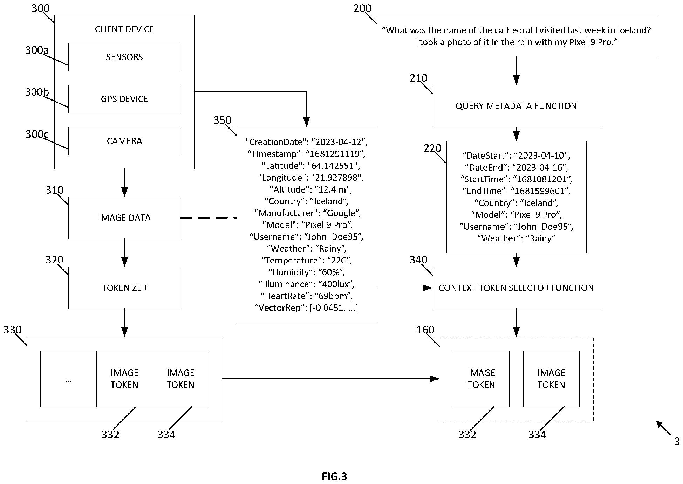

FIG. 1 schematically depicts a system 1 for generating a response 140 to a query. The system comprises a machine learning model 120 configured to process a model input 110 to generate a model output 130. The machine learning model 120 comprises an attention mechanism 122 for generating attention weights 124, which are used by the machine learning model 120 to generate the model output 130. The model input 110 comprises a plurality of context tokens 100 (e.g., 100a, 100b, 100c, 100d) and one or more query tokens 102 (e.g., 102a, 102b, 102c, 102d). While only four particular context tokens 100 and four particular query tokens 102 are depicted in FIG. 1, it will be appreciated that there may be any suitable number of each token in the model input 110. As one example, the query may be "What was the name of the cathedral I visited last week in Iceland? I took a photo of it in the rain with my Pixel 9 Pro.", the query tokens 102 may comprise one or more numeric embeddings of the words ["What", "was", "the", "name", "of", "the", "cathedral", ...], the context for the query may be data such as text, images, video, audio, etc. that is relevant to the query, and the context tokens 100 may be one or more numeric embeddings of the text, images, video, audio, etc. Further details of this specific example is provided below with reference to FIG. 3.

As will become readily apparent, the context and/or query tokens may represent (i.e., comprise a respective numerical representation of) any suitable type of data such as words, word pieces, images, image patches, audio, audio chunks etc. In some examples, the context and/or query tokens may be selected from a predetermined vocabulary of tokens. For example, the predetermined vocabulary of tokens may include a different numeric embedding for each possible element (e.g., text) of the context or query. As one example, the tokens may be one-hot vector encodings of the elements in the predetermined vocabulary of tokens, such as [0, 0, 1, 0, 0, 0, ...] representing a word at a third index of the predetermined vocabulary of tokens. In general, the machine learning model 120 may be configured to receive any suitable type of context tokens 100 and query tokens 102 representing any suitable type of data for generating the response 140 to the query.

To generate the response 140 to the query, the machine learning model 120 may be configured to generate the model output 130 based on the plurality of context tokens 100 and the one or more query tokens 102. In other words, the machine learning model 120 may process the model input 110 comprising the context tokens 100 and the query tokens 102 to generate the model output 130. The model output 130 may be any suitable type of data. For example, the model output 130 may indicate a probability distribution including one or more probability values corresponding to different respective words in the predetermined vocabulary of tokens. In this example, the model output 130 may be used to select a next output token in a sequence of output tokens for the response. Alternatively, the model output 130 may be data indicating a next output token in a sequence of output tokens. In other examples, the model output 130 may be categorical data for classifying the query. That is, the model output 130 may include a probability value corresponding to one or more categories for classifying the query. In general, the model output 130 may be any suitable type of data for generating the response 140 (e.g., for any task suitable for the machine learning model 120, as described in further detail below).

Generating the model output 130 may comprise processing the model input 110 using the attention mechanism 122 of the machine learning model 120 to generate the attention weights 124. That is, the attention weights 124 may be determined using any suitable attention mechanism 122 (e.g., a self-attention mechanism) in accordance with the techniques described below. The resulting attention weights 124 may be obtained as matrix of values, each value corresponding to a different pair of query and context tokens in the input 110. For example, if the model input 110 comprises five thousand context tokens 100 and six hundred query tokens 102, there may in some examples be a total of three million attention weights 124. The attention weights 124 can comprise query-to-context attention weights that indicate an extent to which each of the query tokens in the model input 110 attends to context tokens in the model input 110. In particular, as described below, the query-to-context attention weights can comprise respective weights between each of the query tokens and a selected proper subset of the context tokens, thereby avoiding the need to compute attention weights between each of the query tokens and every one of the context tokens. The attention weights 124 can also comprise context-to-context attention weights that indicate an extent to which each of the context tokens in the model input 110 attends to other context tokens in the model input 110. The context-to-context attention weights can, for example, be used to update embeddings of the context tokens.

As a general overview, the machine learning model 120 may in some examples generate a token embedding (e.g., a vector embedding) for each of the tokens in the model input 110 (i.e., both context tokens 100 and query tokens 102), e.g., using one or more token embedding layers. The token embeddings may be provided as the input to the attention mechanism 122 for generating the attention weights 124 and subsequently attention layer outputs or a "latent output embedding" (i.e., an intermediate output). The latent output embedding may then be processed using one or more additional layers of the machine learning model (e.g., further attention layers, or one or more dense/fully connected neural network layers) to generate the model output 130 (e.g., output probability distribution, categorical data, etc.). The response 140 to the query may then be generated based upon the model output 130. For example, if the response 140 to the query is an answer of "The cathedral you visited last week is called Hallgrimskirkja", the model output 130 may indicate the word "Hallgrimskirkja" at a penultimate iteration of inference, e.g., as a next output token selected from the predetermined vocabulary of tokens preceding an "end-of-string" token ("[EOS]"). In such an example, the response 140 to the query may be generated based upon multiple inference cycles, e.g., the model output 130 may be generated autoregressively. In another specific example, if the response 140 comprises JSON data indicating a classification of "cathedral" for an image depicting a cathedral, the model output 130 may be an output probability distribution for one or more possible categories for the classification (i.e., based upon the machine learning model 120 processing low-level features of one or more image query tokens in the input 110). In this specific example, only one inference cycle may be required.

To address the problems set out above, a proper subset 160 of the plurality of context tokens 100 may be selected, i.e., a subset comprising one or more but not all of the plurality of context tokens 100. The proper subset 160 may be selected based upon context metadata 150, parts of which corresponding to, or associated with, one or more of the plurality of context tokens 100. The proper subset 160 may further be determined based upon at least one of the one or more query tokens 102 (or based upon the query as a whole). As will become readily apparent, the context tokens 100 included in the proper subset 160 may be identified as relevant to the query prior to processing the context tokens and query tokens using the machine learning model. That is, one or more of the context tokens 100 may be selected for the proper subset 160 based on whether those tokens are a match for at least a portion of the query (i.e., at least one of the query tokens 102). Accordingly, a total number of the context tokens 100 considered for attention computations may be reduced (e.g., limited to only those in the proper subset 16). As depicted in FIG. 1, the proper subset 160 only includes two context tokens 100b, 100c. However, in implementations, the proper subset 160 may include any number of the context tokens 100 and may also include a combination of contiguous and/or non-contiguous sequences of the context tokens (e.g., both context token 100a and context token 100c, but not context token 100b and context token 100d, and so on).

Referring to the context metadata 150, as depicted in FIG. 1, context token 100a may correspond to context metadata 150a, context token 100b may correspond to context metadata 150b, context token 100c may correspond to context metadata 150c, and context token 100d may correspond to context metadata 150d. The context metadata 150, i.e., for a particular one of the plurality of context tokens 100, may characterize or indicate information about the respective one of the context tokens 100. The information may be any suitable type of information such as date information, time information, location information, device information (e.g., identifying a device that was used to generate the context token), user information, sensor information, physiological information, and/or semantic information. Such information represented by the context metadata 150 may in some examples be obtained once, i.e., at the time when or after, the context tokens 100 are generated. For example, as described below with reference to FIG. 3, image data may be generated using a camera of a client device and the context metadata 150 may be generated upon creation of the image data. In this example, the context tokens 100 may be tokens generated based on that image data (e.g., by a tokenizer) and the context metadata 150 may comprise information relevant to the image data, in addition to the client device in which it was generated, or any other information relevant to that data or the tokens derived therefrom. The context metadata 150 may be stored in any suitable storage for later use by the machine learning model 120. In some examples, the context metadata 150 may include data indicating a correspondence between particular tokens and particular parts of the context metadata 150. For example, the context metadata 150 may comprise data (e.g., a manifest) indicating that the context metadata 150b corresponds to the context token 100b, such as {index: 564, metadata: {...}, ...} where index 564 is an index of the context token 100b in the input 110 (i.e., an index of that token in the input sequence of tokens).

Accordingly, the model input 110 may be processed using the attention mechanism 122 to generate the attention weights 124 leveraging the proper subset 160 to reduce computational load during attention computations. That is, the machine learning model 120 can be configured to only compute query-to-context attention weights between the query tokens 102 and the context tokens 100 in the proper subset 160. For example, data indicating that the context token 100b and the context token 100c are included in the proper subset 160 can be provided to the machine learning model 120 for determining whether to skip computing query-to-context attention weights for particular tokens, i.e., those not part of the proper subset 160. In some implementations, the machine learning model 120 can determine the required query-to-context attention weights using a mask (e.g., a tensor of binary values) that permits the query tokens to attend to context tokens in the proper subset 160 and prevents the query tokens from attending to context tokens not in the proper subset 160. The query-to-context attention weights can be represented (for example) as a sparse matrix comprising values computed using the attention mechanism only for context tokens in the proper subset.

In another example, keys and values corresponding to different context tokens 100 may be efficiently stored in a machine learning storage (or "KV cache"). In this example, only those keys and values corresponding to the context tokens 100 in the proper subset 160, e.g., corresponding to context tokens 100b, 100c, may be selected and used for determining the plurality of attention weights 124. Once the attention weights 124 have been computed, these respective keys and values may be optionally added to the machine learning storage (not depicted) as previously described for later use.

In some implementations, the proper subset 160 is obtained using a predefined mask for the context tokens 100 in the model input 110 for determining (i.e., by the machine learning model 120 or an algorithm thereof) which attention connections to compute and which not to compute, e.g., such that the attention weight matrices 124 are "sparse". In other words, the attention weights 124 may be generated such that the attention weights 124 indicate that each query token attends to each of the context tokens in the proper subset 160 of the plurality of context tokens and does not attend to any of the context tokens that are not in the proper subset 160 of the plurality of context tokens. The model output 130 may then be generated using the attention weights 124, as previously described, for generating the response 140 to the query.

### Generating query metadata & determining proper subset

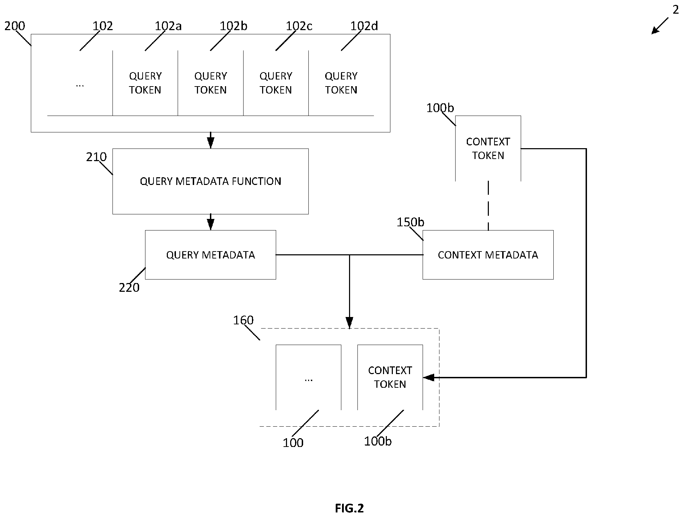

FIG. 2 schematically depicts a system 2 for determining the proper subset 160 of context tokens 100 previously described. First, the query 200 as indicated by the one or more query tokens 102 may be provided as input to a query metadata function 210 that is configured to output query metadata 220 in response to the one or more query tokens 102. The query metadata function 210 may be any suitable function for processing the query 200 to output the query metadata 220. For example, the query metadata function 210 may be a pre-trained machine learning model, a heuristic, a predetermined mapping, computer logic, etc. The query metadata 220 can indicate information about the query 200, e.g., according to a schema used for the context metadata 150 . In a similar manner to the context metadata 150, the information may be any suitable type of information such as date information, time information, location information, device information, user information, sensor information, physiological information, and/or semantic information. The query metadata 220 can, in some examples be extracted once, i.e., at the time when or after, the query 200 is provided (e.g., by a user as input for the machine learning model 120).

Once the query metadata function 210 has determined the query metadata 220 for the query 200, the proper subset 160 may be determined based upon the context metadata 150 for each of one or more of the context tokens 100 and the query metadata 220. That is, for each of the context tokens 100, the respective context metadata 150 (e.g., respective context metadata 150b corresponding to context token 100b) may be compared with the query metadata 220, e.g., to determine a relevance of the respective context token (e.g., 100b) to the query 200. If the respective context token (e.g., 100b) is determined to be relevant to the query 200, that context token (e.g., 100b) may be included in the proper subset 160. The comparison may occur in any suitable way. For example, where the query metadata 210 and/or context metadata 150 indicates monotonically increasing information (e.g., timestamps), a binary search may be used for the comparison. For example, a binary search algorithm can be used to search through time information (e.g., in the form of timestamps) in the context metadata 150 to determine whether e.g., each timestamp falls within a range indicated by the query metadata 220. In another example, the query metadata 220 may comprise pairs of keys (e.g., "Country") and corresponding values (e.g., "Iceland") and the comparison may comprise the use of a lookup table for determining an exact (or approximate, as described below) match. For example, the lookup table can maintain a mapping between context token indices (e.g., an index of 543 for context token 100a indicating a position of the context token 100a in the model input 110) and their respective context metadata (e.g., 150a). The comparison in this example may be made by comparing like keys and values in both the respective context metadata (e.g., 150a) and the query metadata 220. Further detail on the comparison is provided below with reference to a specific example depicted in FIG. 3.

FIG. 3 schematically depicts an example of a system 3 for generating the response 140 to the query 200 using the query metadata 220 and context metadata 350. In this example, a user of a client device 300 (e.g., a mobile phone) may capture an image, using a camera 300c of the client device 300, of a cathedral when on holiday in Iceland. In response, the client device 300 may generate image data 310. The client device 300 can be any appropriate device, such as a mobile phone, smart glasses, personal or tablet computers, smart watches and so on. In many implementations, the client device 300 may include a network interface (not depicted) for transmitting and receiving data over a computer network (also not depicted). Upon creation of the image data 310, the context metadata 350 may be generated (e.g., by the client device 300) and associated with the image data 310. For example, information such as date and time information (e.g., Creation Date and Timestamp) may be recorded, along with location information (e.g., Latitude, Longitude, Altitude), device information (i.e., Manufacturer and/or Model of the client device), sensor information (i.e., information obtained by one or more sensors of the client device, such as Weather, Temperature, Humidity, Illuminance), semantic information (e.g., as represented by a vector embedding over semantic features, e.g., VectorRep), etc. may be recorded. For the semantic information, this could include processing the image data using another machine learning model, e.g., to extract a vector embedding for use in the comparison described above. The context metadata 350 may be stored on the client device 300 and/or on a server (not depicted) for later use (i.e., for determining the proper subset 160). The image data 310 can be at least a portion of the context for the machine learning model 120, e.g., in addition to text, video, audio, etc. previously provided as input to the machine learning model 120.

The user of the client device 300 may subsequently (e.g., a week later) submit the query 200 "What was the name of the cathedral I visited last week in Iceland? I took a photo of it in the rain with my Pixel 9 Pro." as input to the machine learning model 120. That is, the user may prompt the machine learning model 120 in any suitable way (e.g., via a user interface of the client device 300). The system 3 can then identify context tokens 100 relevant to such a query 200 (e.g., tokens relating to Iceland, a point in time last week, and those created using a Pixel 9 Pro device), in order to focus the attention mechanism of the machine learning model 120 on the relevant context tokens, thereby reducing the number of attention computations that are performed. In some examples, the machine learning model 120 is implemented on the client device 300 e.g., such that some or all of the computations performed by the machine learning model 120 can be performed locally on the client device. In other examples, the machine learning model 120 is implemented on a server (not depicted). In response to the user providing the query 200 as input to the machine learning model 120, the query metadata function 210 may process the query 200 and generate (e.g., extract) the query metadata 220 including information indicating date information (i.e., DateStart and DateEnd), time information (i.e., StartTime and EndTime, as UNIX timestamps in this example), location information (i.e., Country), device information (i.e., Model), user information (i.e., Username), and sensor information (i.e., Weather). That is, the query metadata function 210 may process the query 200 and extract the relevant information accordingly. For example, the date and time information may be extracted from the query 200 based upon the portion of the query that indicates "...last week..." and further based upon a current date (e.g., at the time of processing). In another example, the location information, device information, user information, and sensor information may be extracted using a named entity recognition (NER) model (e.g., where the query metadata function 210 includes a pre-trained machine learning model for named entity recognition) based upon portions of the query 200 indicating "Iceland", "rain", and "Pixel 9 Pro". Commercial and open source libraries for performing named entity recognition are widely available. Such processing to extract the query metadata 220 with the query metadata function 210, as before, can occur either on the client device 300 or on a server (not depicted). In some implementations, the query metadata 220 is generated on demand when the user provides the query 200 as input to the machine learning model 120. However, relevant query metadata 220 may be generated at any suitable time (e.g., the query metadata 220 may be extracted for prior user queries and used for subsequent user queries).

To process the image data 310 for processing using the machine learning model 120 (i.e., as one or more of the context tokens 100), the image data 310 may be tokenized using a tokenizer 320 to generate one or more image tokens 330 characterizing the image. For example, a first image token 332 and a second image token 334 may represent different patches or portions of the image. Accordingly, each of the image tokens 330 (i.e., those that are derived from the image data 310) in this example may correspond to the context metadata 350. The context metadata 350 depicted in FIG. 3 may be {tokens: [123, ..., 269], metadata: {"CreationDate": "2023-04-12", "Timestamp": "1681291119", "Latitude": "64.142551", "Longitude": "21.927898", "Altitude": "12.4 m", "Country": "Iceland", "Manufacturer": "Google", "Model": "Pixel 9 Pro", "Username": "John _Doe95", "Weather": "Rainy", "Temperature": "22C", "Humidity": "60%", "Illuminance": "400lux", "VectorRep": [-0.0451, ...], ...}} where the image tokens 330 are assigned indices of 123 to 269, i.e., for keeping track of which context metadata 150 corresponds to which tokens, in an input sequence of tokens for input 110 to the machine learning model 120. While in this specific example each of the image tokens 330 corresponds to the same context metadata 350, it will be appreciated that in other examples each one of the image tokens 330 (i.e., some of the context tokens 100) may correspond to different context metadata 150. That is, different portions (e.g., contiguous and non-contiguous sequences of tokens) of the model input 110 to the machine learning model 120 may correspond to different context metadata 150, as is depicted in FIG. 1.

The context metadata 350 corresponding to the image tokens 330 may be compared with the query metadata 220 to determine the proper subset 160. In FIG. 3, the comparison occurs using a context token selector function 340 to determine whether information about the respective image tokens 330 (i.e., context tokens 100) matches or corresponds to the information about the query 200, i.e., by comparing one or more elements of the context metadata 350 and the query metadata 220. For example, the context token selector function 340 may determine that the date information about the query 200 matches the date information about the image tokens 330 by processing information for keys "DateStart" and "DateEnd" in the query metadata 220 and further processing information for the key "CreationDate" in the context metadata 350. The context token selector function 340 may subsequently determine that the image tokens 330 are to be included in the proper subset 160 based upon the date information "2023-04-12" being within a date range defined by "2023-04-10" to "2023-04-16". As mentioned, comparing the context metadata 350 with the query metadata 220 may be performed in any suitable way and may include exact or approximate matching logic. For example, if the value for key "Model" in the query metadata 220 was "Pixel 9" rather than "Pixel 9 Pro" the computer logic 350 may still determine a match with "Pixel 9 Pro" based upon an approximate match (e.g., a semantic match) or "fuzzy logic". In some examples, the image tokens 330 can be included in the proper subset 160 only if all of the information indicated by the query metadata 220 and/or context metadata 350 matches (i.e., all of the date information, time information, location information, etc.). In other examples, the image tokens 330 can be included in the proper subset 160 if at least some of the information matches (i.e., there are one or more matches for the date information, time information, location information, etc.). Accordingly, in this specific example, the proper subset 160 is determined to include at least two of the image tokens 330 (i.e., 332 and 334) derived from the image data 310, e.g., because the information indicated by the key "Country" in both the context metadata 350 and the query metadata 220 are determined by the context token selector function 340 to be an exact match.

The machine learning model 120 may then process a model input comprising the proper subset 160 of the image tokens 330, and optionally other context tokens (not depicted), together with the query tokens (not depicted) representing the query 200 (i.e., "What was the name of the cathedral I visited last week in Iceland? I took a photo of it in the rain with my Pixel 9 Pro."). The proper subset 160 of the context tokens 330 may thus be used by the machine learning model 120 to determine which of the context tokens 100 to attend to and which not to attend to, as previously described. In this specific example, the proper subset 160 includes the context tokens 100 derived from the image data 310, i.e., the image tokens 330. Such image tokens 330 may, in this example, have been generated in the previous week on the user's holiday to Iceland, and therefore are more likely than the other context tokens (not depicted) to be relevant to the specific query 200 as above. In other words, the context tokens 332, 334 in the proper subset 160 are likely to be relevant to the cathedral in Iceland, which is the subject of the query 200, because those tokens were derived from an image generated in Iceland in the previous week, as identified by the query and context metadata comparison. Accordingly, the machine learning model 120 may process the input 110 and generate the model output 130 as previously described (e.g., by performing query-to-context attention computations only for those context tokens in the proper subset 160). The response 140 may therefore be generated by the machine learning model 120 as "The cathedral you visited last week is called Hallgrimskirkja" in response to processing at least the image tokens 332, 334 and query tokens indicating the query 200, the image tokens 332, 334 being derived from an image of a cathedral recorded in Iceland a week prior to submission of the query 200. It will be appreciated that the machine learning model 120 may have been trained on images including such a cathedral and would therefore be configured to recognise low-level patterns in the image tokens 332, 334 that may signify the correct answer to the user's query 200, i.e., that the cathedral is called "Hallgrimskirkja". For example, the machine learning model 120 may be a vision language model (VLM) trained on a largescale dataset comprising images and respective captions to perform an image captioning task. In such cases, the VLM can have any appropriate neural network architecture that allows the model to receive an input that includes one or more images and the query tokens and to process the input to generate a text or image output in response to the input. Some examples of such architectures include the Flamingo architecture (ArXiv: 2204.14198), the PALM-E architecture (ArXiv: 2303.03378), and the PALI architecture (ArXiv:2209.06794).

When generating the response 140, keys and values corresponding to different query tokens 102 may be generated by the machine learning model to determine response-to-query attention weights between the response tokens and the query tokens. The response tokens can then be selected based on the response-to-query attention weights and the corresponding values for the query tokens. That is, the machine learning model response 120 can generate the model output 130 by performing response-to-query attention computations in addition to query-to-context attention computations. The keys and values for the query tokens 102 can be stored in the machine learning storage ( "KV cache"), for retrieval and use during the generation of successive response tokens. For example, the respective keys and values for the query tokens determined when generating a first of the response tokens may optionally be added to the machine learning storage for use in generating further response tokens.

### Training the query metadata function

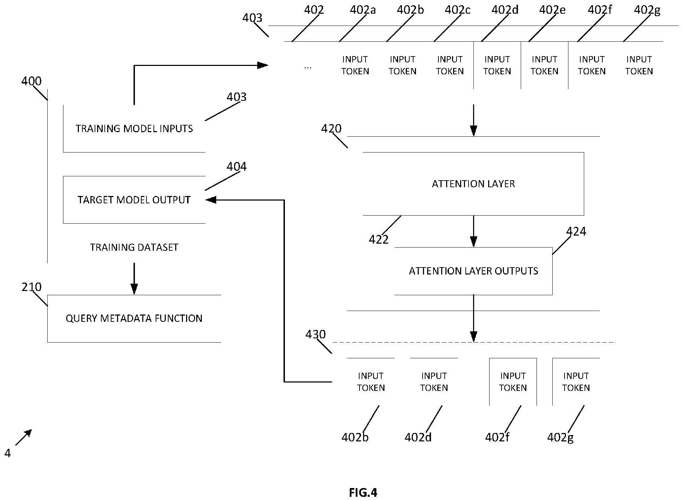

FIG. 4 schematically depicts a system 4 for generating a training dataset 400 for training the query metadata function 210. In this case, the query metadata function 210 may be a pre-trained machine learning model, as previously described. The query metadata function 210 may be trained in any suitable way (e.g., using a supervised machine learning method). As depicted, the query metadata function 210 may be trained using a training dataset 400 comprising training model inputs 403 and corresponding target model outputs 404. It will be appreciated that each training model input 403 can comprise one or more query tokens 402 (e.g., 402a, 402b, 402c, 402d, 402e, 402f, 402g) and the corresponding target model output 404 can comprise one or more output tokens (not depicted) that should be generated by the query metadata function 210 in response to the training model input 403. The training model input 403 may indicate an example training query (e.g., the query 200 as previously described) and the target model output 404 (e.g., the query metadata 220) may indicate information about the example training query, i.e., a desired output. In some examples, the training dataset 400 may be provided based upon human annotations, i.e., data curated by human annotators. For example, one or more example queries may be provided to one or more users, e.g., via a display, and the one or more users may provide their annotations or classifications, e.g., via a user interface, in response. Accordingly, the training dataset 400 may be generated by including data indicating the example queries as the training model inputs 403 and data indicating the annotations or classifications as the target model output 404. As a specific example, the training input data 403 may be presented to a user indicating "Please could you tell me more about that math problem we discussed on Thursday?" and the human annotator may generate the target model output 404 indicating {"day": "Thursday", "subject": "Mathematics"}. Such a training dataset 400 may thus be used to train the query metadata function 210 to perform any suitable function, e.g., named entity recognition.

It is envisaged that the training input data 403 target model output 404 may be any suitable type of data, i.e., any data corresponding to a type of input suitable to be received by the query metadata function 210 and a type of output from the query metadata function 210 respectively. For example, the training model inputs 403 may be numerical embeddings of text (i.e., pre-tokenized) or may be stored as a (e.g., UTF-8) string of text indicating an example training query. As another example, the target model output 404 may be data indicating a probability distribution that includes a probability value for each possible category of information about the example training query, or simply may be a string of text indicating the information about the example training query.

The query metadata function 210 may be trained based upon pairs of training input data 403 and target model output 404. For example, the training model input 403 may be provided as input to the query metadata function 210 and the query metadata function 210 may produce an output in response. Such an output may be compared with the target model output 404 (i.e., ground truth data) using a loss function, to compute a loss value. One or more parameters of the query metadata function 210 can then be updated based on the loss value, e.g., where the query metadata function comprises a plurality of neural network layers, by backpropagating gradients of the loss function through the neural network layers. Training the query metadata function 120 using the training dataset 400 can be performed in any suitable way (e.g., incorporating semi-supervised learning rather than supervised learning only). The query metadata function 120 may have also been pre-trained prior to further training (fine-tuning) with the training dataset 400.

Alternatively, or in addition, to enhance the training dataset 400 and thus performance (e.g., accuracy) of the query metadata function 210 thereby enabling the techniques described herein, the training dataset 400 or a portion thereof may be generated in the following way. At a high level, the target model output 404 may be determined based upon a subset 430 of the one or more input tokens 402 from the training input data 403. The techniques described below provide a mechanism for determining which portions (e.g., input tokens 402b, 402d, 402f, 402g) of the training input data 403 are most relevant. Accordingly, these relevant portions may be provided as the ground truth data (e.g., labels) for training the query metadata function 210. In some implementations, these relevant portions (i.e., the input tokens) undergo further processing, data cleansing, formatting, augmentation, or any other suitable pre-processing before being provided as ground truth data.

To extract relevant ones of the input tokens 402, the training input data 403, i.e., the input tokens 402, may be provided as input to an attention layer 422 of a second machine learning model 420. In some examples, the second machine learning model 420 is the same as the machine learning model 120 previously described. In other examples, the second machine learning model 420 is a different machine learning model (e.g., a smaller machine learning model with fewer parameters). The attention layer 422 of the second machine learning model 420 may be configured to compute query-to-context attention weights, and thus attention activations (i.e., a final output of the attention layer 422 based upon the attention weights), in a consistent manner with the description herein (e.g., consistent with the attention mechanism 122 previously described).

As mentioned, providing the input tokens 402 (i.e., a token embedding derived therefrom) to the attention layer 422 of the second machine learning model 420 may generate a plurality of attention layer outputs (i.e., the "activations") in response. Each of the attention layer outputs can correspond to a particular one of the input tokens 402 and thus may be identified accordingly. In other words, for a sequence of five input tokens there may be a total of five attention activation vectors each corresponding to a different one of the input tokens 402. To determine the subset 430 of the input tokens 402 for generating the target model output 404, one or more of the attention layer outputs 424 each corresponding to a different one of the input tokens 402 may be analysed. For example, attention activation vectors for each input token may comprise one or more continuous values (e.g., numerical values between -1 and 1) which may be analysed. Specifically, a magnitude of the attention layer outputs 424 may be analysed to determine the subset 430. That is, attention layer outputs with a high magnitude may indicate that the particular input token (e.g., 402b) is relevant or important to the example input query, i.e., training input data 403. For example, the attention layer outputs 424 corresponding to input token 402b may be a 1x512 vector including one or more continuous values, i.e., some of the attention layer outputs 424, such as [-0.27, 0.93, -0.39, -0.71, 0.19, 0.17, -0.22, -0.46, 0.78, ...]. A magnitude of each of the continuous values may be determined and analysed. For example, an average magnitude for the attention layer outputs 424 in the previous example may be determined to be 0.76 across all 512 dimensions. Accordingly, in this specific example, the particular input token 402b may be included in the subset 430 because it exceeds a predetermined threshold such as 0.6.

Analysing the magnitudes of the attention layer outputs 424 may occur in any suitable way. For example, the magnitude of all of the attention layer outputs 424 corresponding to a particular one of the input tokens 402 may have to exceed a threshold for the particular one of the input tokens 402 to be included in the subset 430. However, in other examples, the magnitude of only at least one of the attention layer outputs 424 corresponding to a particular one of the input tokens 402 may have to exceed a threshold for the particular one of the input tokens 402 to be included in the subset 430. Once the magnitudes of the attention layer outputs 424 have been analysed to determine the subset 430 of the one or more input tokens 402, those input tokens 402 in the subset 430 (or some data derived therefrom, as described above) may be provided as the target model output 404 (or ground truth data). The training dataset 400 may thus be enhanced. Such techniques allow for a greater collation of high quality training examples which thus improve the quality of the query metadata 220 output from the query metadata function 210. In this way, matching the query metadata 220 with context metadata 150 may also be improved.

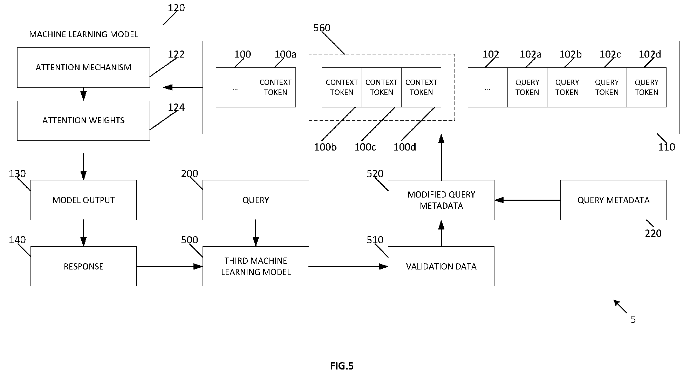

FIG. 5 schematically depicts a system 5 for enhancing the response 140 to the query 200 by modifying the query metadata 220. As will now be apparent, the proper subset 160 described with reference to the description above has an effect on the response 140 to the query 200. That is, those context tokens 100 not included in the proper subset 160 (e.g., 100a and 100d depicted in FIG. 1) may not be attended to as context (i.e., using the attention mechanism 122), thus leading to information embedded in those context tokens 100 not being incorporated into the response 140. This could be due to the query metadata 220 being too specific (e.g., indicating date information for a specific day rather than for a period of a week). As a result, the response 140 may, for example, not contain an answer to a question included in the query 200. In other examples, the response 140 may not contain a specific enough answer to a question included in the query 200. It is thus desirable to optimize which ones of the context tokens 100 are included in the proper subset 160 and which are not based upon whether the query 200 has been satisfied, such that the response 140 satisfies the query 200 whilst still significantly reducing the overall number of attention computations required for a given inference cycle, as conferred by the determination and use of the proper subset 160.

Accordingly, the response 140 to the query 200 may be improved by determining whether the response 140 satisfies the query. Validation data 510 may be provided to indicate whether the response 140 satisfies the query 200. In some examples, the validation data 510 may be generated by providing the response 140 and the query 200 as input to a third machine learning model 500. However, in other examples, use of the third machine learning model 500 is not required (as below). In some implementations, the third machine learning model 500 was the machine learning model 120 described with reference to FIG. 1, however the use other machine learning models is also envisaged for determining whether the response 140 satisfies the query 200.

As an example, if the response 140 was "The cathedral you visited last week is called Hallgrimskirkja", and the query 200 was "What was the name of the cathedral I visited last week in Iceland? I took a photo of it in the rain with my Pixel 9 Pro.", the third machine learning model 500 may process the response 140 and the query 200 and output validation data 510, such as a data comprising a numerical value of 0.87 indicating a high confidence that the response 140 satisfies the query 200. However, if the response 140 in this example was "It appears that I was not able to find the information you were looking for" the validation data 510 may indicate that the response 140 does not satisfy the query 200. In another example, the validation data 510 may include text (e.g., a full response following the response 140 to the query 200) such as the full text "It appears that I was not able to find the information you were looking for. Do you want me to have another look?". In this example, input may subsequently be received by a user that triggers a second response to the query 200 to be generated, in accordance with the description below. In yet another example, the validation data 510 could be a function call included in the response 140 to the query 200 (i.e., generated by the machine learning model 120 where the third machine learning model 500 is the machine learning model 120 described with reference to FIG. 1). In this example, the third machine learning model 500 may generate the response 140 as "It appears that I was not able to find the information you were looking for. I will have another look. {func_name: re_read(), parameter: query_176}". In this example, the response 140 may be parsed by functions associated with the machine learning model 120 to trigger a function with the name re_read() to be executed including the query 200 as a parameter of that function. In yet another example, the validation data 510 may be generated in response to a user providing input, e.g., to a system implementing the techniques described herein, indicating that the response 140 does not satisfy the query 200. In other words, the validation data 510 in some examples may be generated with or without use of a machine learning model. As will become readily apparent, the validation data 510 may then be used to determine whether to re-generate a response (i.e., a second response) to the query 200, e.g., if 0.87 exceeds a predetermined threshold, user input is received, or a function call is made, etc.

Accordingly, if the validation data 510 indicates that the response 140 does not satisfy the query 200, then the query metadata 220 may be modified to generate modified query metadata 520. As will now be apparent different (i.e., modified) query metadata 220 may have an effect on a number of the context tokens 100 included in the proper subset 160. For example, if the query metadata 220 was {"DateStart": "2023-04-10", "DateEnd": "2023-04-16", ...} and the modified query metadata 520 was {"DateStart": "2023-04-3", "DateEnd": "2023-04-23", ...}, using the modified query metadata 520 rather than the query metadata 220 to determine the proper subset 160 would likely result in more of the context tokens 100 being included in the proper subset 160. This is because there may be a broader range of context tokens 100 matching date information indicated by the modified query metadata 520 as opposed to the query metadata 220. In other words, the modified query metadata 520 may be modified to indicate, in this example, different date information (i.e., 2023-04-3 to 023-04-23 rather than 2023-04-10 to 2023-04-16) such that more of the context tokens 100 may be taken into account when generating the response 140 to the query 200. The query metadata 220 may be modified in any suitable way. That is, the query metadata 220 may be modified to indicate modified date information, time information, location information, device information, user information, sensor information, physiological information, and/or semantic information. While the above example describes broadening the time information indicated by the query metadata 220 such that the number of context tokens 100 included in the proper subset 160 may increase, it is envisaged that the query metadata 220 may be modified such that the number of the context tokens 100 included in the proper subset 160 decreases (e.g., where the modified query metadata 520 indicates narrower date or time information, or indicates more specific information for matching with the context metadata 150).

A second proper subset 560 or "modified" proper subset 160 may be determined based upon the context metadata 150, as previously described, and the modified query metadata 520. Once the second proper subset 560 has been determined, the input 110 may be provided to the machine learning model 120 to generate second model output for generating a second response (not depicted) to the query 200. In this case, generating the second model output may comprises applying the attention mechanism 122, in a similar manner to before, but in this case where the attention weights 124 indicate that each query token 100 attends to each of the context tokens in the second proper subset 560, rather than the proper subset 160, as previously described. In addition, the attention weights 124 generated in this way may indicate that each query token 100 does not attend to each of the context tokens 100 that are not in the second proper subset 560. In this way, the attention weights 124 are modified such that the model output and thus the response (i.e., the second model output and second response) are also modified and take into account the appropriate context tokens 100.

In the example above where the response 140 to the query 200 was "It appears that I was not able to find the information you were looking for", the query metadata 220 for this response may be modified to generate the modified query metadata 520 that causes a context token 100d corresponding to respective context metadata 150d to be included in the second proper subset 560. The modified query metadata 520 in this example may indicate broader date information (e.g., beginning at the start of the previous week but ending at the present day rather than at the end of the previous week). An effect of this may be that the second response to the query 200 is generating by the machine learning model 120 as "No relevant information was found last week, however, I found a photo from a couple of days ago. It appears that the cathedral you visited is called "Hallgrimskirkja". Such a response to the query 200 may not have been possible without modifying the query metadata 220. In this way, modifying the query metadata 220 provides control for which context tokens 100 are included in the proper subset 160, 560 and may account for cases where the query 200 does not include accurate information for matching context tokens 100 or in cases where greater or less context is desirable.

### Flowchart

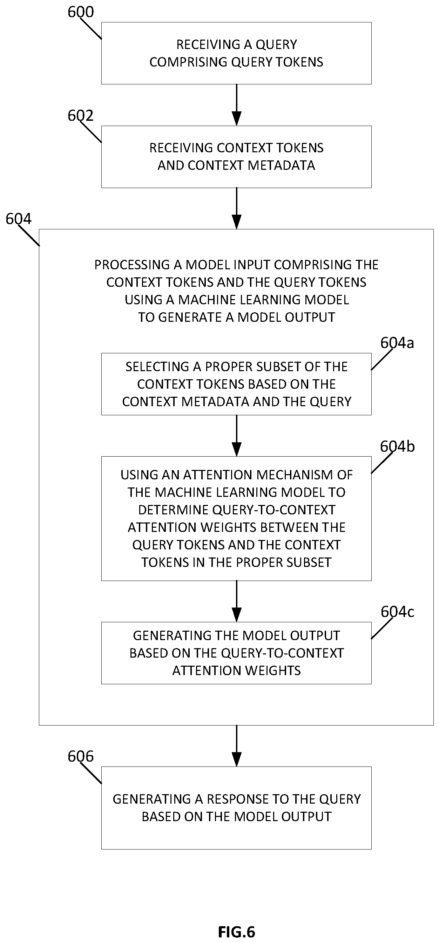

FIG. 6 depicts a flow diagram of a method performed by one or more computers consistent with the techniques described herein.

At step 600, the method comprises receiving a query comprising one or more query tokens.

At step 602, the method comprises receiving a plurality of context tokens and context metadata characterizing one or more of the context tokens.

At step 604, the method comprises processing a model input that comprises the context tokens and the one or more query tokens using a machine learning model to generate a model output. The machine learning model comprises an attention mechanism for determining attention weights between query tokens and context tokens. Processing the model input using the machine learning model comprises steps 604a, 604b, and 604c.

At step 604a, the method comprises selecting a proper subset of the plurality of context tokens based on the context metadata and the query.

At step 604b, the method comprises using the attention mechanism to determine query-to-context attention weights between the one or more query tokens and the context tokens in the proper subset of the plurality of context tokens.

At step 604c, the method comprises generating the model output based on the query-to-context attention weights.

At step 606, the method comprises generating a response to the query based on the model output.

### Clauses

Further aspects are defined in the following clauses:
1. A method performed by one or more computers, the method comprising: receiving a query comprising one or more query tokens; receiving a plurality of context tokens and context metadata characterizing one or more of the context tokens; processing a model input that comprises the context tokens and the one or more query tokens using a machine learning model to generate a model output, the machine learning model comprising an attention mechanism for determining attention weights between query tokens and context tokens; and generating a response to the query based on the model output, wherein processing the model input using the machine learning model comprises: selecting a proper subset of the plurality of context tokens based on the context metadata and the query; using the attention mechanism to determine query-to-context attention weights between the one or more query tokens and the context tokens in the proper subset of the plurality of context tokens; and generating the model output based on the query-to-context attention weights.
2. The method of clause 1, wherein using the attention mechanism to determine the query-to-context attention weights between the one or more query tokens and the context tokens in the proper subset of the plurality of context tokens comprises: using the plurality of context tokens to determine a corresponding key embedding for each context token in the proper subset of the plurality of context tokens; and for each of the one or more query tokens, determining a respective query-to-context attention weight between the query token and each of the key embeddings for the context tokens in the proper subset of the plurality of context tokens.
3. The method of clause 1 or 2, wherein generating the model output based on the query-to-context attention weights comprises: using the context tokens to determine a corresponding value embedding for each context token in the proper subset of the plurality of context tokens; for each of the one or more query tokens, determining a respective output for the query token by combining the value embeddings for the context tokens using the corresponding query-to-context attention weights for the query token; and determining the model output based on the respective outputs for the one or more query tokens.
4. The method of clause 3, wherein using the context tokens to determine the corresponding value embedding for each context token in the proper subset of the plurality of context tokens comprises: obtaining a respective embedding for each of the context tokens in the plurality of context tokens; and using the attention mechanism to update the embeddings of the context tokens in at least the proper subset of the plurality of context tokens, comprising: determining context-to-context attention weights between the context tokens in the plurality of context tokens; and using the context-to-context attention weights to update the embeddings of the context tokens in at least the proper subset of the plurality of context tokens; and determining the corresponding value embedding for each context token in at least the proper subset of the plurality of context tokens based on the updated embeddings.
5. The method of clause 4, wherein determining context-to-context attention weights between the context tokens in the plurality of context tokens comprises determining context-to-context attention weights between the context tokens in the plurality of context tokens in the proper subset of the plurality of context tokens and context tokens not in the proper subset of the plurality of context tokens.
6. The method of clause 5, further comprising using the attention mechanism to update the embeddings of each of the context tokens in the plurality of context tokens.
7. The method of any one of clauses 3-6, comprising using the plurality of context tokens to determine a corresponding key embedding and corresponding value embedding for each of the plurality of context tokens.
8. The method of clause 7, wherein the corresponding key embedding and the corresponding value embedding for each of the context tokens is determined before the query is received.
9. The method of any one of the preceding clauses, wherein generating the response to the query based on the model output comprises, selecting one or more response tokens for the response based on the model output and, for each of one or more iterations: using the attention mechanism to determine response-to-context attention weights between the one or more response tokens and the context tokens in the proper subset of the plurality of context tokens; and selecting a further one or more response tokens for the response based on the query-to-context attention weights and the response-to-context attention weights.
10. The method of clause 9, wherein selecting one or more response tokens for the response based on the model output comprises using the attention mechanism to determine response-to-query attention weights between each of the one or more response tokens and the one or more query tokens and wherein selecting the further one or more response tokens for the response is further based on the response-to-query attention weights.
11. The method of any one of the preceding clauses, wherein the context tokens are generated by a user device and the context metadata characterizes each of the context tokens according to one or more of: a time that the context token was generated, a location of the user device when the context token was generated, and one or more sensor values measured by a sensor of the user device when the context token was generated.
12. The method of any one of the preceding clauses, wherein selecting a proper subset of the plurality of context tokens based on the context metadata and the query comprises: processing the query to determine query metadata for the query; and selecting the proper subset of the plurality of context tokens based on comparisons between the query metadata and the context metadata characterizing the one or more of the context tokens.
13. The method of clause 12, wherein the context metadata indicates respective values characterizing one or more properties associated with the context tokens and the query metadata comprises one or more target values for the one or more properties.
14. The method of clause 13, wherein the comparisons between the query metadata and the context metadata comprise determining whether the respective values characterizing one or more properties of the context tokens match the corresponding one or more target values for the one or more properties.
15. The method of any one of clauses 12-14, wherein processing the query to determine query metadata for the query comprises processing the query using a trained query metadata extraction machine learning model to determine the query metadata for the query.
16. The method of clause 15, wherein the query metadata extraction machine learning model comprises a language model or a vision language model.
17. The method of clause 15 or 16, wherein the query metadata extraction machine learning model has been trained to determine query metadata for a query using one or more training examples, each training example including one or more query tokens and target query metadata, the training comprising: for each of the one or more training examples, processing the one or more query tokens of the training input of the training example using the metadata extraction machine learning model to generate corresponding predicted query metadata for the training example; and adjusting parameters of the metadata extraction machine learning model based on comparisons between the generated query metadata and corresponding target query metadata for the training examples.
18. The method of any one of clauses 15-17, wherein each of the training examples has an associated plurality of training context tokens and training context metadata characterizing each of the training context tokens, and wherein the target query metadata for each training example is determined by: using an attention mechanism to determine query-to-context attention weights between the one or more query tokens of the training example and each of the training context tokens associated with the training example; and determining the target query metadata for the training example based on the training context metadata characterizing the training context tokens and the query-to-context attention weights for the training example.
19. The method of clause 18, wherein determining the target query metadata for the training example based on the training context metadata characterizing the training context tokens and the query-to-context attention weights for the training example comprises: selecting a subset of the training context tokens based on the query-to-context attention weights; and determining the target query metadata for the training example based on the training context metadata characterizing the training context tokens in the subset.
20. The method of clause 19, wherein determining the target query metadata for the training example based on the training context metadata characterizing the training context tokens in the subset comprises: identifying training context metadata that is common to the training context tokens in the selected subset of training context tokens and determining the target query metadata for the training example based on the common training context metadata.
21. The method of any one of clauses 12-20, wherein generating a response to the query based on the model output comprises: determining a candidate response based on the model output; processing the candidate response and the query to generate validation data indicating whether the candidate response satisfies the query; modifying the query metadata based upon the validation data; modifying the proper subset of the plurality of context tokens based upon the context metadata and the modified query metadata; using the attention mechanism to determine modified query-to-context attention weights between the one or more query tokens and the context tokens in the modified proper subset of the plurality of context tokens; generating a modified model output based on the modified query-to-context attention weights; and generating the response based on the modified model output.
22. The method of any one of the preceding clauses, wherein the machine learning model is a language model or a vision language model
23. The method of any one of the preceding clauses, wherein the plurality of context tokens and/or the one or more query tokens represent one or more of: text data, image data, audio data, video data, and sensor data.
24. The method of any one of clauses 1-23, wherein the machine learning model performs a machine learning task to generate the model output, the machine learning task comprising one or more of: an object or action detection task, a classification task, a captioning task, a question-answering task, a character or word recognition task, an image or audio generation task, or a computer language generation task.
25. The method of any one of the preceding clauses, further comprising performing an agent control task, wherein an agent interacts with an environment to perform the agent control task, wherein the context tokens and/or the one or more query tokens include one or more observations of the environment, and wherein the model output is used to select one or more actions to be performed by the agent in the environment in response to the one or more observations.
26. The method of any one of the preceding clauses, further comprising: generating, using a client device, context data comprising the plurality of context tokens; receiving, from the client device, the query and the context data; and transmitting the response to the query over a computer network to the client device.
27. A computing system comprising: one or more processors; and one or more non-transitory computer-readable media storing computer-readable instructions configured to cause one or more processors to perform a method according to any one of the preceding clauses.
28. One or more non-transitory computer-readable media storing computer-readable instructions configured to cause one or more computing devices to perform a method according to any one of clauses 1 to 26.
29. A distributed computing system for generating a response to a query, the distributed computing system comprising: a client device configured to receive a query comprising one or more query tokens; a server configured to perform the method of any one of clauses 1 to 26 to generate a response to the query; and wherein the server is configured to receive the query from the client device over a computer network and to transmit the response to the query to the client device over the computer network.

### Other

In general, the machine learning models described herein can have any appropriate architecture for processing inputs to generate an output. As one example, the machine learning models may comprise an auto-regressive generative model that can auto-regressively generate an output sequence based on the input. The generative model can, for example, comprise a large language model (LLM) that can auto-regressively generate tokenized embeddings of text data, a vision-language model (VLM) that can auto-regressively generate tokenized embeddings of image or video data, e.g., in response to a text input or that can auto-regressively generate tokenized embeddings of text, e.g., in response to an image input, an audio language model that can auto-regressively generate tokenized embeddings of text data, or a multimodal model that can that can generate tokens representing any of text, image or audio, e.g., in response to a input comprising any of text, image or audio, and so forth. As one example, the generative model may comprise one or more (self-) attention layers, e.g., a Transformer model.

That is, the machine learning models described herein may comprise a neural network characterized by having a succession of attention neural network layers (e.g., a self-attention neural network layer). A self-attention neural network layer has an attention layer input for each element of the input sequence and is configured to apply an attention mechanism over the attention layer input to generate an attention layer output for each element of the input sequence. The attention layer input and the attention layer output may comprise vectors of the same dimension, and the attention neural network layers may have residual connections. There are many different types of attention mechanisms that are suitable for use with the techniques described herein, such as self-attention, multi-headed attention, cross-attention, etc. A self-attention layer can be one that maps a query and a set of key-value pairs, each derived from an input to the self-attention layer (e.g., all vectors), to an output from which an output of the self-attention layer is derived. The output can be computed as a weighted sum of the values, weighted by a similarity function of the query to each respective key.

As an example, in a self-attention neural network layer an input embedding may be used to determine a query vector and a set of key-value vector pairs, that are used to generate an updated embedding comprising a weighted sum of the values, weighted by a similarity function of the query to each respective key. The similarity function may comprise, e.g., a dot product, cosine similarity, or other similarity measure; the query, keys, and values may all be vectors. For example the attention mechanism may be configured to apply each of a query transformation, e.g., defined by a matrix *W^{Q},* a key transformation, e.g., defined by a matrix *W^{K},* and a value transformation, e.g., defined by a matrix *W^{V},* to the attention layer input for each element of an input sequence ***X*** to derive a respective query vector *Q = XW^{Q},* key vector *K = XW^{K},* and value vector *V = XW^{V}* which are used determine an attended sequence for the output.

As will now be apparent, the attention layer input may be the input 110, or an input derived therefrom such as an embedding. Likewise, the outputs of the attention mechanism, e.g., the keys, the queries, the values, and other outputs derived therefrom such as a dot product of the queries and keys or scaled attention scores, may be the attention weights 124 described with reference to FIG. 1.

As described herein, the model inputs and model outputs may comprise tokens. In some implementations, the tokens can represent text, e.g., words, wordpieces or characters, in a natural or computer language. For example, text may be received, e.g., as a series of encoded characters, e.g., UTF-8 encoded characters; such "characters" can include Chinese and other similar characters, as well as logograms, syllabograms and the like. A text encoder, i.e., a tokenizer, can process a sequence of text to represent the text as a series of text tokens from a predetermined vocabulary of text tokens, e.g., that each represent words, wordpieces or characters in a natural or computer language. The computer language may be any formal language used to communicate with a computer, e.g., a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens may be converted into audio data that represent speech corresponding to the text.

Also or instead the tokens may represent an image or a portion of an image. For example, a set (sequence) of input or output tokens can represent an image. Each image token may comprise a block encoding of values of the pixels in a different region of an image that maps a set of values of the pixels to a respective image token. The block encoder may comprise a neural network, e.g., having one or more (self-)attention layers, such as a Transformer neural network as previously described.

Also or instead the tokens may represent an audio waveform. For example, a set (sequence) of input or output tokens can represent audio data representing a waveform, e.g., instantaneous audio amplitude values or time-frequency audio data. Each audio token may comprise a block encoding of the audio waveform in a different time segment of the audio that maps a set of values representing the audio waveform to a respective audio token.

Some of the machine learning models described herein may be configured to generate the next token in the sequence based upon an input comprising a text prompt that includes a sequence of tokens in a natural language. This process can be repeated to extend the text prompt one token at a time to generate a natural language output, i.e., to generate the natural language output auto-regressively token by token. At each time "time step," the language model neural network processes the current sequence to generate a probability distribution over a vocabulary of tokens. The next token can then be selected using the probability distribution, e.g., by sampling from the distribution using nucleus sampling or another sampling technique or by selecting the highest-probability token. The tokens in the vocabulary can include any of a variety of tokens, e.g., some combination of words, sub-words, characters, punctuation and other symbols, and numbers. In general, the language model neural network is trained on a corpus of text made up of tokens from the vocabulary (and optionally other tokens that can be mapped to a designated out-of-vocabulary token), to predict the next token in a sequence of tokens from the training data.

A language model neural network can be made to perform a particular task by providing a natural language description of the desired response as an input or "prompt". In some cases, the prompt may be a few-shot prompt where a few, e.g., 1 to 10, examples of a query and an example output are provided in the text prior to the actual query. For example, the context tokens can represent multiple query-response pairs and the one or more of the query-response pairs can be selected for the proper subset of the context tokens based on the received query.

Instead or in addition, a language model neural network may be "fine-tuned" to perform a particular task, by obtaining a pre-trained language model neural network trained on a large corpus of examples as previously described and then further training part or all of the language model neural network on a relatively small number of examples particular to the type of task that is to be performed.

The language model neural network may be a large language model neural network, e.g., one that has greater than 1 billion, 10 billion or 100 billion trained parameters. The language model neural network may have been trained on greater than 10 billion, 100 billion or 1000 billion words or tokens representing words or other text tokens, e.g., sub-words (also known as "word pieces").

In some implementations, the language model neural network is an autoregressive transformer neural network as previously described.

The task, as referred to herein, may include any suitable task that may be performed based upon the model output 130. The task may include a classification task such as classifying the query (i.e., text classification, image classification, audio classification, video classification, sensor classification, or time-series classification). For example, the query could include time-series data (e.g., tokens representing time-series data) and the task could be to classify that time-series data into one or more categories by outputting categorical data (e.g., the model output 130). The task may include a control task for a robotic device. For example, the model output 130 may include signal data that causes the robotic device to be controlled (i.e., by providing the signal data to the robotic device). The task may include a machine translation task. For example, the input 110 could include input tokens representing text in a first language and the response 140 to the query could include output tokens representing a natural language translation of that text in a second language. The task may include a summarization task. For example, the response 140 to the query could include output tokens indicating a summary of some text represented by the query (i.e., the query tokens). The task may include a question-answering task. For example, the input 110 could include query tokens indicating a question "What is this a picture of?" in addition to indicating an image of an elephant. In this example, the response 140 may include tokens indicating an answer such as "The picture depicts an elephant", or indeed the model output 130 could be categorical data indicating a classification of an elephant. The task may include a generation task, i.e., a task for generating data. For example, the query tokens may represent an image of an elephant and the response 140 to the query may include video data indicating a video of the elephant, i.e., where the machine learning model 120 has been trained to generate video data based upon image data. The task may include a signalling task. For example, the query tokens may represent audio of a user speaking the words "Please schedule a meeting for next Monday" and the model output 130 could be a signal to a client device of the user which causes a meeting to be scheduled in a digital calendar of the client device.

In some examples, the task is a task for a real-world environment. That is, the machine learning model 120 may be trained to perform tasks in the real-world environment. For example, the task could include tasks in the field of autonomous self-driving, industrial robotics, healthcare, smart homes, agriculture, environmental monitoring etc. To perform tasks in the real-world environment, the machine learning model 120 may be configured to control (e.g., by outputting a signal as previously described) one or more mechanical and/or electronic devices for performing the task in the real-world environment. The mechanical and/or electronic devices are devices configured to perform specific tasks utilizing electrical and/or mechanical systems. Electronic devices may operate by, e.g., using electrical circuits including components such as transistors, diodes, and microprocessors (e.g., to process instructions for controlling the mechanical and/or electronic device) to perform the task. Mechanical devices may operate by, e.g., using physical movement and mechanical forces to perform the task. Mechanical devices may, in some examples, include gears, levers, motors, end effectors, etc. An example electromechanical device may be the robotic device as previously described, where the robotic device includes a circuit for processing instructions derived from output from the machine learning model 120 and an end effector for performing a task, such as operating a lever arm in the real-world.

In some examples, the machine learning model 120 may be implemented as part of a personal agent for a user of a client device. The machine learning model 120 may be implemented on the client device or on a server. The machine learning model 120 may be configured to control operation of the client device (e.g., using the signal data) in response to input provided to the machine learning model 120 by the user, e.g., for answering user queries or performing tasks for the user. The machine learning model 120 may be implemented as a distributed system whereby the query is received from a user at the client device, the query is transmitted to a server for further processing, and the response to the query is provided back to the client device over a computer network.

The robotic device, as described above, may take various forms, including but not limited to a telepresence robot, a robotic arm, a bi-arm robotic device, a humanoid robot or other bipedal robot, a quadraped robot such as a "robot dog", a wheeled robot, an aquatic robot, and so forth. The robotic device may include control logic. Control logic may take various forms, such as a real time controller, one or more processors, one or more field-programmable gate arrays ("FPGA"), one or more application-specific integrated circuits ("ASIC"), and so forth. In some implementations, the logic may be operably coupled with memory. Memory may take various forms, such as random-access memory ("RAM"), dynamic RAM ("DRAM"), read-only memory ("ROM"), Magnetoresistive RAM ("MRAM"), resistive RAM ("RRAM"), NAND flash memory, and so forth. In some implementations, the control logic may be operably coupled with one or more joints, one or more end effectors, and/or one or more sensors. A joint of a robot may broadly refer to actuators, motors (e.g., servo motors), shafts, gear trains, pumps (e.g., air or liquid), pistons, drives, propellers, flaps, rotors, or other components that may create and/or undergo propulsion, rotation, and/or motion. An end effector may broadly refer to a variety of tools that may be operated by the robotic device in order to accomplish various tasks. For example, an end effector may take the form of a claw with two opposing "fingers" or "digits." Such a claw is one type of "gripper" known as an "impactive" gripper. The gripper may have more than two digits, for example, three, four or five digits. Other types of grippers may include but are not limited to "ingressive" (e.g., physically penetrating an object using pins, needles, etc.), "astrictive" (e.g., using suction or vacuum to pick up an object), or "contigutive" (e.g., using surface tension, freezing or adhesive to pick up object). More generally, other types of end effectors may include but are not limited to drills, brushes, force-torque sensors, cutting tools, deburring tools, welding torches, containers, trays, and so forth. In some implementations, end effector may be removable, and various types of modular end effectors may be installed onto robot. Some robots, such as some telepresence robots, may not be equipped with end effectors.

Large-scale language models implemented as neural networks can produce impressive results on a range of natural language processing tasks, including question answering. However, implementations of some of these models, particularly Transformer-based models, can have more than a billion parameters and can require substantial computing resources, power, and time to process a network input to generate the network output. Sometimes such models can have can more than 10 billion or more than 100 billion parameters. If such models were used at scale, e.g., in the way that search engines are, there could also be environmental considerations.

An additional consideration arises when the neural network is implemented on a digital assistant device, e.g., a mobile device, implemented in a computing system that includes a back end component, in particular a data server, in communication with the digital assistant device over a data communications network such as the Internet. There is then a need to optimize the computing load between the digital assistant device and the back end component. This need can be particularly acute with a large-scale language model because of its substantial memory and computing requirements compared with those typically found on a mobile device.

The techniques described herein address these problems. In some implementations the described techniques facilitate a reduced a computational load, and improved load distribution, particularly when the large-scale language model is implemented as a neural network in a multitasking and parallel processing computer system, distributed across multiple sites and interconnected by a data communication network, such as the distributed computing system described herein.

In some implementations the described techniques enable a beneficial distribution of computing load between a local, mobile computing device and a back-end server in a network. More particularly, in implementations, processing inputs with the machine learning model 120 requires fewer attention computations thus reducing computational load and improving latency between the client device and the back-end component.

In some implementations the machine learning model 120 may be implemented on a client device or digital assistant device such as a mobile device. In such implementations the machine learning model 120 can be implemented (wholly) on the mobile device. The mobile device generally has less working memory than the back-end data server, less computational capacity than the back-end data server, or both. Therefore, there are many implementations in which this is not possible (e.g., where the machine learning model 120 includes a relatively large number of parameters). Computational capacity can be measured in computing operations per second, e.g., FLOPS (floating point operations per second). The techniques described herein enable computational load to be optimized, particularly where the neural network comprises an autoregressive, Transformer-based neural network. Thus, the techniques described herein enable more implementations of the machine learning model 120 to operate on mobile devices rather than as a back-end component, reducing latency and energy consumption.

In general, the machine learning model 120, once trained on a large corpus of data, and even without fine tuning, can perform a wide range of tasks as previously described. After such training, the models can be deployed for use in performing the task(s). For instance, models can be deployed in an environment that enables users to provide requests to process specified multimodal inputs to generate corresponding outputs. Users can provide the requests, e.g., by way of a user interface or through an application programming interface (API). The requests can be transmitted from a user device (e.g., over a data communication network, e.g., the internet) to one or more computers implementing the system, e.g., in a data center. The agent(s) can process multimodal inputs specified by user requests to generate corresponding outputs, and then transmit the outputs to user devices (e.g., over a data communication network).

In general, the machine learning model 120 can be trained to perform any sort of machine learning task or tasks. For instance, the machine learning model can be deployed in an environment that enables users to provide requests for the machine learning model to process specified inputs to generate corresponding model outputs. Users can provide the requests, e.g., by way of a user interface or through an application programming interface (API). The requests can be transmitted from a user device (e.g., over a data communication network, e.g., the internet) to one or more computers implementing the machine learning model, e.g., in a data center. The machine learning can process inputs specified by user requests to generate corresponding model outputs, and then transmit the model outputs to user devices (e.g., over a data communication network).

In implementations, a particular task that is to be performed by the machine learning model can be described by part or all of the sequence of text in the input to the model. For example in a multimodal input that includes an image, video, or audio item such a prompt might specify "Generate a caption", "Generate a description", "Answer the following question: [about the image, video, or audio item]", or "Detect a person". Where the model is used for an agent control task a prompt may define "Take the knife out of the drawer", or "Q: What action should the robot take to take the knife out of the drawer?". Also or instead, such a prompt may give one or more examples of a task to be performed. The machine learning model can be trained on multiple natural and/or computer languages and the prompt may then specify a language to use.

The machine learning model can have been trained to perform one or more machine learning task by, for example, any appropriate machine learning training method, such as supervised or semi-supervised learning, e.g., by gradient optimization of an objective function, reinforcement learning, and so on.

A few examples of machine learning tasks follow.

For some tasks the context tokens and/or query tokens represent an image or video, e.g., from a camera or other imaging device that captures the image or video from a real-world environment, and/or audio, e.g., audio data such as speech or other sounds captured from a real-world environment. In general, the tasks described below may be tasks that require spatial awareness or other context from the image, video, or audio item. For example, a prompt may ask "What is the object in the top left corner?", or "What was the answer to the spoken question?". As one example, the context tokens can comprise image, video and/or audio data captured by a client device and the query can comprise a question related to the image, video and/or audio data that was captured under a particular set of circumstances, e.g., at a particular location or time, or while the user of the client device was performing a particular task, and so on.

As one example the task may comprise an object or action detection task. A task-specific training data item may comprise an image, video, or audio item containing one or more objects or actions, and the response can comprise or represent text that describes or otherwise labels detected object(s) or action(s), and may (for an image or video) include bounding-box coordinates for the detected object(s) or action(s), e.g., "10 20 90 100 cat 20 30 100 100 dog".

As another example the task may comprise a classification task, e.g., an object, scene, or action classification task. For example, the context tokens and/or query tokens can represent an image, video, or audio item and the model output 130 may comprise data, e.g., text, that classifies object(s), the scene, or action(s) into one of a plurality of classes.

As another example the task may comprise an image, video, or audio item describing task, e.g., a captioning task (which, as used here, includes an audio description task to explain what is happening in a video). The context tokens and/or the query tokens can represent an image, video, or audio item and the model output 130 may comprise data, e.g., text, describing the image, video, or audio item. For example the model output 130 may provide a caption or description for the image, video, or audio item, or it may count objects in the image, video, or audio item, or it may provide some other form of description of the image, video, or audio item.

As another example the task may comprise an image, video, or audio question-answering task. The context tokens and/or the query tokens can represent an image, video, or audio item and the model output 130 can comprise a sequence of text that describes the image, video, or audio item. For example, the model output 130 may comprise data, e.g., text, that answers a query specified in a prompt sequence of text in accordance with an image, video, or audio item represented by the context tokens. This may be used, e.g., to answer questions about visual plots and charts or about sounds.

As another example the task may comprise a character or word recognition task, e.g., an OCR (optical character recognition) task. The context tokens and/or query tokens may comprise an image, video, or audio item and the model output 130 can comprise a sequence of text (e.g., characters or words) that includes text that is depicted in the image or video, or that is represented as speech in the audio item. As one example, a user may provide a query such as "What was the name of the author of the book that I read on holiday last summer?" and the machine learning model 120 can perform a character or word recognition task using the subset of context tokens that represent image, video, or audio data determined to be relevant to the query, e.g., based on a location and/or time that the context tokens were generated.

As another example the task may comprise a still or moving image or audio generation task. For example, the model output 130 can comprise image data defining values for pixels of a still or moving image or audio data representing values of an audio waveform.

As another example the task may comprise a computer language text generation task. The context tokens and/or query tokens can comprise an image, video, or audio item and the model output can comprise a sequence of text in a computer language for generating the image, video, or audio item. For example, the context tokens can comprise e.g., a web page, plot, or chart and the model output 130 may comprise text in a computer language for generating or rendering the web page, plot, or chart.

In another example of a computer language text generation task the context tokens may comprise an image, video, or audio item and the query tokens comprise a request for a sequence of text in a computer language for performing a task in relation to the image, video, or audio item, e.g., a data processing task that involves analyzing the content of the image, video, or audio item to provide a result of the analysis or, e.g., a search to search for information relating to the content of the image, video, or audio item. The computer language in the model output may comprise computer language for invoking a function or calling one or more external APIs. Merely as one example, such an output may be formatted as a JSON object. As previously, the sequence of text in the query tokens may define the task to be performed and the context tokens may comprise, e.g., an image, video, or audio item in relation to which the task is to be performed, e.g., a task that involves manipulation of particular types of data that may benefit from access to an API such as mathematical data, date/time related data, scientific data, recent data that may post-date training of the model (that may be accessed by a search function or API), and so forth. The method may then include using the text in the computer language to perform the task.

In general where the model output 130 comprises text this may be provided as speech representing the text.

In some implementations the machine learning task comprises an agent control task in which the agent interacts with an environment to perform the agent control task. In these implementations the context tokens and/or query tokens include an observation characterizing the environment. For example the query tokens can include a sequence of text that defines the task to be performed by the agent and the context tokens can represent an image, video, audio, or other observation of the environment, e.g., captured by a camera or other imaging device, or by a microphone, from a real-world environment. The model output can comprise an action selection output, e.g., including text, that is used to select one or more actions to be performed by the agent in the environment in response to the observation. As an illustration the model output 130 may define an action as text such as "A: 132 114 128 5 25 156", that can be converted into a control signal for a mechanical agent, such as a robot, e.g., "ΔT=[0.1,-0.2,0] ΔR=[ [ [10] ^o,25] ^o,-7^o ]". As another example the action selection output may also or instead define one or more low-level skills, e.g., from a vocabulary of previously learnt skills. The sequence of text in the query tokens can describe the task to be performed, e.g., "What action should the robot take to [perform task]".

In some agent control implementations, the environment is a real-world environment and the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot or other mechanical agent interacting with the environment to accomplish a specific task, e.g., to locate or manipulate an object of interest in the environment or to move an object of interest to a specified location in the environment or to navigate to a specified destination in the environment. In these implementations, the observations may include, e.g., one or more of: images, object position data, and sensor data to capture observations as the agent interacts with the environment. The actions may define control signals to control the robot or other mechanical agent, e.g., positions, torques, or other control signals for the parts of the mechanical agent, or higher-level control commands.

In some agent control implementations the agent can be a software agent, i.e., a computer program, configured to perform a task. Some examples where the agent is a software agent now follow.

As one example the environment may be an integrated circuit design and the task may be a routing task for routing interconnection lines of the integrated circuit. The observations may be of component positions and/or interconnections, and the actions may comprise component placing or interconnect routing actions. An integrated circuit with interconnection lines routed as determined may then be fabricated.

As another example the environment may be a real-world computing environment and the task may be to manage the distribution of jobs or tasks across computing resources, e.g., on a mobile device and/or in a data center. The observations may include observations of computing resources such as compute or memory capacity, or Internet-accessible resources, or that relate to the operation of the computing resources in processing the jobs or tasks; and the actions may include assigning jobs or tasks to particular computing resources.

As another example the environment may be a real-world computing environment and the task is to manage the processing, e.g., by one or more real-world servers, of a queue of continuously arriving jobs. The observations may comprise observations of the times of departures of successive jobs, or the time intervals between the departures of successive jobs, or the time a server takes to process each job, or the arrival times, or time intervals between the arrivals, of successive jobs, or data characterizing the type of job(s). The actions may comprise actions that allocate particular jobs to particular computing resources.

As another example the environment may comprise a real-world computer system or network and the task may be to maintain security of the computer system or network. The observations may comprise any observations characterizing operation of the computer system or network, and the actions may comprise actions to control the operation, e.g., to limit or correct abnormal or undesired operation, e.g., because of the presence of a virus or other security breach.

As another example the environment may comprise a data packet communications network environment, and the task may be to route packets of data over the communications network. The actions may comprise data packet routing actions and the observations may comprise, e.g., observations of a routing table which includes routing metrics such as a metric of routing path length, bandwidth, load, hop count, path cost, delay, maximum transmission unit (MTU), and reliability.

In some agent control implementations, the agent may be a human agent and the environment may be a real-world environment. For example, the agent can be a human user of a digital assistant such as a smart speaker, smart display, or some other device that is used to instruct the user to perform actions. The task may be any real-world task that the user wishes to perform. The observations may be obtained from an observation capture subsystem, e.g., a monitoring system such as a video camera or sound capture system, to capture visual and/or audio observations of the user performing the task. The actions may comprise instructions in the form of, e.g., text, image, video, or audio data such as speech, that guide the user in performing the task.

Some implementations comprise a method of using the machine learning model and the context tokens to control an agent to perform one or more tasks while interacting with an environment. For example, the query may comprise an instruction for an agent to interact with an environment to perform one or more tasks specified in the query and the response can indicate one or more actions for the agent to carry out while performing the one or more tasks. The machine learning model can process the query and the context tokens to determine a model output for selecting the one or more actions. In some cases, the context tokens and/or the query (e.g., the query tokens) can comprise observations of the environment, which are processed by the machine learning model to determine the one or more actions for the agent to carry out.

In some cases, the observations and/or the query may include textual or spoken instructions provided to the agent by a third-party (e.g., an operator of the agent). For example, the agent may be an autonomous vehicle, and a user of the autonomous vehicle may provide textual or spoken instructions to the agent (e.g., to navigate to a particular location).

In these implementations, the actions may be control signals to control the robot or other mechanical agent, e.g., torques for the joints of the robot or higher-level control commands, or the autonomous or semi-autonomous land, air, sea vehicle, e.g., torques to the control surface or other control elements, e.g., steering control elements of the vehicle, or higher-level control commands. The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example in the case of an autonomous or semi-autonomous land or air or sea vehicle the control signals may define actions to control navigation, e.g., steering, and movement e.g., braking and/or acceleration of the vehicle. The actions may be language actions that are in turn used to generate control data to control the robot or other mechanical agent.

In some implementations, the environment is a real-world environment, the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the mechanical agent, e.g., robot, may be interacting with the environment to accomplish a specific task, e.g., to locate or manipulate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator. For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In some implementations the environment is a simulation of the above-described real-world environment, and the agent is implemented as one or more computers interacting with the simulated environment. For example the simulated environment may be a simulation of a robot or vehicle and the machine learning model may be trained on the simulation and then, once trained, used in the real-world.

In some agent control implementations the agent may be a human agent and the environment may be a real-world environment. For example the agent can be a human user of a digital assistant such as a smart speaker, smart display, or some other device that is used to instruct the user to perform actions. The task may be any real-world task that the user wishes to perform. The observations may be obtained from an observation capture subsystem, e.g., a monitoring system such as a video camera or sound capture system, to capture visual observations of the user performing the task. The actions may comprise instructions in the form of, e.g., text, image, video, or audio data such as speech, that guide the user in performing the task. Thus the observations are observations of a real-world environment in which a human is performing a task, e.g., an image observation from an image sensor and/or a language observation from a speech recognition system; and the actions are language actions that control (instruct) the human, e.g., using natural language or images, to perform actions in the real-world environment to perform the task. A language action may be an action that outputs a natural language sentence, e.g., by defining a sequence of language tokens, e.g., words or wordpieces, to be emitted at sequential time steps. Thus the agent may comprise a user interface device such as a digital device (a "digital assistant"), e.g., a smart speaker or smart display or other device, e.g., with a natural language input and/or output, that controls (instructs) a human user to perform a task. In general such a digital device can be a mobile device with a natural language interface to receive natural language requests from a human user and to provide natural language responses. It may also include a vision based input, e.g., a camera and/or display screen. The digital device may include a language model or language generation neural network system either stored locally, or accessed remotely, or both. The user interface device may comprise, e.g., a mobile device, a keyboard (and optionally display), or a speech-based input mechanism, e.g., to input audio data characterizing a speech waveform of speech representing the input from the user in the natural or computer language and to convert the audio data into tokens representing the speech in the natural or computer language, i.e., representing a transcription of the spoken input. The user interface can also include a text or speech-based output, e.g., a display and/or a text-to-speech subsystem. Thus in implementations the agent actions contribute to performing the task. A monitoring system, e.g., a video camera system, may be provided for monitoring the action (if any) which the user actually performs at each time step in case, e.g., due to human error, it is different from the action which the reinforcement learning system instructed the user to perform. The monitoring system can be used to determine whether the task has been completed. Training data, e.g., for training the machine learning model by reinforcement learning, may be collected by recording the actions which the user actually performed based on the instruction. A reward value of an action may be generated, for example, by comparing the action the user took with a corpus of data showing a human expert performing the task, e.g., using techniques known from imitation learning, or in some other way, e.g., using a trained reward model. A system of this type can learn how to guide a human to perform a task, e.g., avoiding difficult to perform actions.

In some implementations the environment is a real-world manufacturing environment for manufacturing a product, such as a chemical, biological, or mechanical product, or a food product. As used herein, "manufacturing" a product also includes refining a starting material to create a product, or treating a starting material, e.g., to remove pollutants, to generate a cleaned or recycled product. The manufacturing plant may comprise a plurality of manufacturing units such as vessels for chemical or biological substances, or machines, e.g., robots, for processing solid or other materials. The manufacturing units are configured such that an intermediate version or component of the product is moveable between the manufacturing units during manufacture of the product, e.g., via pipes or mechanical conveyance. As used herein manufacture of a product also includes manufacture of a food product by a kitchen robot.

The agent may comprise an electronic agent configured to control a manufacturing unit, or a machine such as a robot, that operates to manufacture the product. That is, the agent may comprise a control system configured to control the manufacture of the chemical, biological, or mechanical product. For example the control system may be configured to control one or more of the manufacturing units or machines or to control movement of an intermediate version or component of the product between the manufacturing units or machines.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data preprocessing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
receiving a query comprising one or more query tokens;
receiving a plurality of context tokens and context metadata characterizing one or more of the context tokens;
processing a model input that comprises the context tokens and the one or more query tokens using a machine learning model to generate a model output, the machine learning model comprising an attention mechanism for determining attention weights between query tokens and context tokens; and
generating a response to the query based on the model output,
wherein processing the model input using the machine learning model comprises:
selecting a proper subset of the plurality of context tokens based on the context metadata and the query;
using the attention mechanism to determine query-to-context attention weights between the one or more query tokens and the context tokens in the proper subset of the plurality of context tokens; and
generating the model output based on the query-to-context attention weights.

2. The method of any preceding claim, wherein using the attention mechanism to determine the query-to-context attention weights between the one or more query tokens and the context tokens in the proper subset of the plurality of context tokens comprises:
using the plurality of context tokens to determine a corresponding key embedding for each context token in the proper subset of the plurality of context tokens; and
for each of the one or more query tokens, determining a respective query-to-context attention weight between the query token and each of the key embeddings for the context tokens in the proper subset of the plurality of context tokens.

3. The method of any preceding claim, wherein generating the model output based on the query-to-context attention weights comprises:
using the context tokens to determine a corresponding value embedding for each context token in the proper subset of the plurality of context tokens;
for each of the one or more query tokens, determining a respective output for the query token by combining the value embeddings for the context tokens using the corresponding query-to-context attention weights for the query token; and
determining the model output based on the respective outputs for the one or more query tokens.

4. The method of claim 3, wherein using the context tokens to determine the corresponding value embedding for each context token in the proper subset of the plurality of context tokens comprises:
obtaining a respective embedding for each of the context tokens in the plurality of context tokens; and
using the attention mechanism to update the embeddings of the context tokens in at least the proper subset of the plurality of context tokens, comprising:
determining context-to-context attention weights between the context tokens in the plurality of context tokens; and
using the context-to-context attention weights to update the embeddings of the context tokens in at least the proper subset of the plurality of context tokens; and
determining the corresponding value embedding for each context token in at least the proper subset of the plurality of context tokens based on the updated embeddings.

5. The method of claim 4, wherein determining context-to-context attention weights between the context tokens in the plurality of context tokens comprises determining context-to-context attention weights between the context tokens in the plurality of context tokens in the proper subset of the plurality of context tokens and context tokens not in the proper subset of the plurality of context tokens.

6. The method of any preceding claim, wherein generating the response to the query based on the model output comprises selecting one or more response tokens for the response based on the model output and, for each of one or more iterations:
using the attention mechanism to determine response-to-context attention weights between the one or more response tokens and the context tokens in the proper subset of the plurality of context tokens; and
selecting a further one or more response tokens for the response based on the query-to-context attention weights and the response-to-context attention weights, and optionally:
wherein selecting one or more response tokens for the response based on the model output comprises using the attention mechanism to determine response-to-query attention weights between each of the one or more response tokens and the one or more query tokens and wherein selecting the further one or more response tokens for the response is further based on the response-to-query attention weights.

7. The method of any preceding claim, wherein the context tokens are generated by a user device and the context metadata characterizes each of the context tokens according to one or more of: a time that the context token was generated, a location of the user device when the context token was generated, and one or more sensor values measured by a sensor of the user device when the context token was generated.

8. The method of any preceding claim, wherein selecting a proper subset of the plurality of context tokens based on the context metadata and the query comprises:
processing the query to determine query metadata for the query; and
selecting the proper subset of the plurality of context tokens based on comparisons between the query metadata and the context metadata characterizing the one or more of the context tokens.

9. The method of claim 8, wherein the context metadata indicates respective values characterizing one or more properties associated with the context tokens and the query metadata comprises one or more target values for the one or more properties, and optionally:
wherein the comparisons between the query metadata and the context metadata comprise determining whether the respective values characterizing one or more properties of the context tokens match the corresponding one or more target values for the one or more properties.

10. The method of claim 8 or 9, wherein processing the query to determine query metadata for the query comprises processing the query using a trained query metadata extraction machine learning model to determine the query metadata for the query.

11. The method of claim 10, wherein the query metadata extraction machine learning model has been trained to determine query metadata for a query using one or more training examples, each training example including one or more query tokens and target query metadata, the training comprising:
for each of the one or more training examples, processing the one or more query tokens of the training input of the training example using the metadata extraction machine learning model to generate corresponding predicted query metadata for the training example; and
adjusting parameters of the metadata extraction machine learning model based on comparisons between the generated query metadata and corresponding target query metadata for the training examples.

12. The method of claim 10 or 11, wherein each of the training examples has an associated plurality of training context tokens and training context metadata characterizing each of the training context tokens, and wherein the target query metadata for each training example is determined by:
using an attention mechanism to determine query-to-context attention weights between the one or more query tokens of the training example and each of the training context tokens associated with the training example; and
determining the target query metadata for the training example based on the training context metadata characterizing the training context tokens and the query-to-context attention weights for the training example, and optionally:
wherein determining the target query metadata for the training example based on the training context metadata characterizing the training context tokens and the query-to-context attention weights for the training example comprises:
selecting a subset of the training context tokens based on the query-to-context attention weights; and
determining the target query metadata for the training example based on the training context metadata characterizing the training context tokens in the subset,
and optionally wherein determining the target query metadata for the training example based on the training context metadata characterizing the training context tokens in the subset comprises:
identifying training context metadata that is common to the training context tokens in the selected subset of training context tokens and determining the target query metadata for the training example based on the common training context metadata.

13. The method of any one of claims 8 to 12, wherein generating a response to the query based on the model output comprises:
determining a candidate response based on the model output;
processing the candidate response and the query to generate validation data indicating whether the candidate response satisfies the query;
modifying the query metadata based upon the validation data;
modifying the proper subset of the plurality of context tokens based upon the context metadata and the modified query metadata;
using the attention mechanism to determine modified query-to-context attention weights between the one or more query tokens and the context tokens in the modified proper subset of the plurality of context tokens;
generating a modified model output based on the modified query-to-context attention weights; and
generating the response based on the modified model output.

14. A system comprising:
one or more computers; and
one or more storage devices storing instructions that when executed by the one or computers cause the one or more computers to perform operations according to any one of claims 1 to 13.

15. One or more non-transitory computer-readable media storing instructions that when executed by the one or computers cause the one or more computers to perform operations according to any one of claims 1 to 13.
